(19) Europäisches Patentamt
European Patent Office
Office européen des brevets

(11) **EP 4 749 976 A1**

(12) **EUROPEAN PATENT APPLICATION**

(43) Date of publication:
**27.05.2026 Bulletin 2026/22**

(21) Application number: **24315529.8**

(22) Date of filing: **22.11.2024**

(51) International Patent Classification (IPC):
**H04L 9/00** (2022.01)　　　**H04L 9/30** (2006.01)

(52) Cooperative Patent Classification (CPC):
**H04L 9/008; H04L 9/3093**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Zama SAS**
**75002 Paris (FR)**

(72) Inventors:
• **Bernard, Olivier Louis André**
**75002 Paris (FR)**
• **Joye, Marc François C.**
**75002 Paris (FR)**

(74) Representative: **DeltaPatents B.V.**
**Fellenoord 370**
**5611 ZL Eindhoven (NL)**

(54) **HOMOMORPHICALLY COMPUTING AN EXTERNAL PRODUCT PARAMETRIZED BY A MORPHISM AND METHOD FOR BOOTSTRAPPING**

(57)　Some embodiments are directed to a cryptographic method that includes
- obtaining (310) a first plaintext encrypted according to a main encryption, and a second plaintext encrypted according to a further auxiliary encryption, the first plaintext and the second plaintext being encrypted according to the same key (sk), and

- applying (320) a further external product to the first plaintext encrypted according to the main encryption and to the second plaintext encrypted according to the further auxiliary encryption to obtain an encryption of the product of a morphism applied to the first plaintext and of the second plaintext according to the same key (sk).

*Fig. 2a*

## Description

## TECHNICAL FIELD

The presently disclosed subject matter relates to a cryptographic method for homomorphically computing an external product parametrized by a morphism in an homomorphic encryption scheme, a cryptographic method for homomorphically computing an inner product, a method for performing a computation using fully homomorphic encryption cryptography, a method for evaluating a neural network on one or more received FHE encrypted data items, a system for performing a cryptographic method, and a computer storage medium.

## BACKGROUND

Homomorphic cryptography allows one to perform computations, e.g., evaluate circuits, over encrypted data without being able to decrypt. For example, input data and computation results may be received and returned in encrypted form. Intermediate data, e.g., an internal state of the computation, may also be in encrypted form.

Even though the result of the computation is returned in an encrypted form, when decrypted the output is the same as if the operations had been performed on the unencrypted data. Homomorphic encryption can be used for privacy-preserving outsourced storage and computation. This allows data to be encrypted and outsourced to a cloud environment for processing and/or storage, all while encrypted.

For example, homomorphic cryptography may be applied in fields such as health care in which privacy regulations may make it difficult to share plain data, but computations on encrypted medical data may be allowable. For example, a medical model developed, say, to classify medical data may be configured to receive medical data from a third party, say a hospital, in encrypted form. The medical model might, e.g., classify medical data, e.g., as normal or abnormal, or as having some particular medical syndrome, disease, or other disorder. Using homomorphic encryption, the medical model may be applied to medical data that is received in encrypted form. This means that the party that offers the medical model does not have access to the plain medical data that corresponds to the encrypted medical data. The user of the service can decrypt the result of the medical model application.

Various popular homomorphic encryption schemes employ noise. For example, encryption of a data item may comprise mapping the data item to a point in a key-dependent lattice, to which some noise is added.

When a data item has just been encrypted the noise is low-the encryption is fresh. For example, the amount of noise is so low, that if a data item were to be decrypted, the noise can be removed at some point in the decryption process, e.g., by rounding. On the other hand, the noise should be high enough to make attacks on the system sufficiently hard. For example, in the hypothetical absence of noise, many homomorphic encryption schemes could be attacked with linear algebra, or other efficient algorithms, e.g., lattice-based algorithms. When a data item is encrypted, noise is added that is chosen so that attacks are hard while homomorphic operations can still be performed. Most homomorphic operations increase the noise that is inherent in an encrypted homomorphically encrypted data item. When many such operations are performed, the noise may reach a level that unique decryption is no longer possible. At that point, the scheme breaks down.

Generally speaking, two approaches have been developed in the art to deal with this phenomenon. The first is a levelled homomorphic encryption. A levelled homomorphic encryption can perform some number of operations one after the other. The levelled homomorphic encryption is designed such that the expected or worst-case noise at the end of such a number of operations is below a bound needed for exact decryption, or on any case causes only limited deviation to the decrypted plaintext. Thus, there is a limit to the number operations that can be performed.

Another approach are so-called bootstrapping operations. A bootstrap operation is possible if the homomorphic encryption is strong enough to evaluate homomorphically the decryption algorithm in the encrypted domain-sometimes called a bootstrappable homomorphic encryption. A levelled homomorphic encryption scheme may be converted to an unlevelled homomorphic encryption scheme by performing bootstrap operations. The bootstrapping operation reduces noise in an encrypted data item. By means of a bootstrapping operation, noise in a ciphertext can be reduced to a fixed amount. A bootstrap operation increases the number of operations than can be performed on an encrypted data item or removes the limit altogether. Operations are performed and if the expected or worst-case noise in a ciphertext gets close to the level where unique decryption is no longer possible, bootstrapping is used to reduce the noise. Bootstrapping is typically computationally expensive; so it is advantageous improve this algorithm.

A conventional algorithm for bootstrapping is disclosed "Programmable Bootstrapping Enables Efficient Homomorphic Inference of Deep Neural Networks" by I. Chillotti et al. (incorporated herein by reference and available at https://doi.org/l0.1007/978-3-030-78086-9 1). Note that the bootstrapping requires a large number of bootstrapping keys-auxiliary public key material that allows a homomorphic computation method or device to perform the bootstrapping. Furthermore, the distribution of secret key digits, is severely restricted in the known system.

## SUMMARY

In an embodiment, a cryptographic method for homomorphically computing an external product parametrized by a morphism ($\psi$) in an homomorphic encryption scheme is provided. The method provides a further auxiliary encryption and further external product. The latter is configured to compute a further external product of two encrypted plaintexts, e.g., a first plaintext encrypted according to a main encryption and a second plaintext encrypted according to the further auxiliary encryption. Interestingly, the further external product has the useful property that it includes a morphism of choice into the external product-applied to the first plaintext. Accordingly, when using the further external product instead of the conventional main external product one can compute a morphism without additional computational costs, or at least with few additional computational costs.

It turns out that including such a morphism into the external product can be exploited when computing a bootstrapping, in particular a programmable bootstrapping, to significantly reduce the amount of bootstrapping keys that are needed.

Although the inventors found that their method can be applied with great generality to a large class of homomorphic encryption schemes. In an embodiment, the method is applied to $GLWE_s$ encryption using for the morphism a mapping, defined by sending variable x to $x^u$.

An embodiment of the method may be implemented on an electronic device, e.g., a computer. An embodiment of the method may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer readable medium for performing an embodiment of the method when said program product is executed on a computer.

In an embodiment, the computer program comprises computer program code adapted to perform all or part of the steps of an embodiment of the method when the computer program is run on a computer. Preferably, the computer program is embodied on a computer readable medium.

## BRIEF DESCRIPTION OF DRAWINGS

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,

Figure 1 schematically shows an example of an embodiment of computation homomorphic computation system 100,
Figure 2a schematically shows an example of an embodiment of operations in an homomorphic encryption scheme 200,
Figure 2b schematically shows an example of an embodiment of homomorphically computing an external product parametrized by a morphism,
Figure 3 schematically shows an example of an embodiment of a method for homomorphically computing an external product parametrized by a morphism,
Figure 4a schematically shows a computer readable medium having a writable part comprising a computer program according to an embodiment,
Figure 4b schematically shows a representation of a processor system according to an embodiment.

### Reference signs list

The following list of references and abbreviations corresponds to the Figures, and is provided for facilitating the interpretation of the drawings and shall not be construed as limiting the claims.

| 100, 102 | an homomorphic computation system |
|---|---|
| 110, 110.1, 110.2a | data-provider device |
| 120 | an homomorphic computation device |
| 111, 121 | a processor system |
| 112, 122 | a storage |
| 113, 123 | a communication interface |
| 172 | a computer network |
| 200 | an homomorphic encryption scheme |

| | |
|---|---|
| 210 | a main encryption |
| 211 | a plaintext |
| 212 | a plaintext encrypted according to the main encryption |
| 220 | a main auxiliary encryption |
| 221 | a plaintext |
| 222 | a plaintext encrypted according to the main auxiliary encryption |
| 230 | an external product |
| 231 | a first encrypted operand |
| 232 | a second encrypted operand |
| 233 | an encrypted output |
| 240 | a morphism |
| 250 | a further auxiliary encryption |
| 251 | a plaintext |
| 252 | a plaintext encrypted according to the further auxiliary encryption |
| 260 | a further external product |
| 261 | a first encrypted operand |
| 262 | a second encrypted operand |
| 263 | an encrypted output |
| 271 | a first plaintext encrypted according to the main encryption |
| 272 | a second plaintext encrypted according to the further auxiliary encryption |
| 273 | an output encrypted according to the first main encryption |
| 300 | a cryptographic method for homomorphically computing an external product parametrized by a morphism |
| 310 | obtaining a first and second plaintext |
| 320 | applying the further external product |
| 1000, 1001 | a computer readable medium |
| 1010 | a writable part |
| 1020 | a computer program |
| 1110 | integrated circuit(s) |
| 1120 | a processing unit |
| 1122 | a memory |
| 1124 | a dedicated integrated circuit |
| 1126 | a communication element |
| 1130 | an interconnect |
| 1140 | a processor system |

## DESCRIPTION OF EMBODIMENTS

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only, but also includes every other combination of features described herein or recited in mutually different dependent claims.

An encryption scheme is a set of three algorithms: a key generation algorithm, an encryption algorithm, and a decryption algorithm. The key generation algorithm takes on input a security parameter and outputs an encryption key ek and a private decryption key sk. The encryption key can be public or private. When it is private, it may be assumed that ek = sk; the encryption scheme is then said symmetric. The encryption algorithm is a (probabilistic) algorithm that transforms a plaintext message into a ciphertext using key ek. The decryption algorithm needs private key sk and recovers the plaintext from a ciphertext that encrypts it.

For a symmetric encryption scheme, an encryption of a plaintext $\mu$ is termed trivial when one can produce a ciphertext that correctly decrypts to $\mu$ but without requiring the key ek = sk; the resulting so-obtained ciphertext is however not supposed offering confidentiality on $\mu$.

Distinction is sometimes made between plaintext and cleartext. A plaintext is meant to be unencrypted information pending input into the encryption algorithm. A cleartext is raw information, in the clear.

Encryption enables the protection of sensitive data while it is stored or when it needs to be transferred. Yet, standard encryption technologies require data being decrypted to be processed. The idea behind homomorphic encryption (Rivest, Adleman, and Dertouzos 1978) is to never decrypt and to directly compute on encrypted data. It bears its name from the mathematical notion of homomorphism: elements of one set are transformed to elements of a second set while maintaining the relationships between the elements of the two sets.

Applied to encryption, this means that operating on plaintexts (i.e., unencrypted data) or on ciphertexts (i.e., encrypted data) will yield an equivalent result-in the clear when operating on plaintexts and under an encrypted form when operating on ciphertexts. For example, given any two ciphertexts $c_1$ and $c_2$ respectively encrypting plaintexts $\mu_1$ and $\mu_2$, there exists a public operation $\boxplus$ such that $c_3 = c_1 \boxplus c_2$ is an encryption of $\mu_3 = \mu_1 + \mu_2$. An encryption scheme that only supports the addition is said additively homomorphic. It is said of an encryption scheme that it is fully homomorphic when it supports both addition and multiplication of ciphertexts, as any program can be represented as a circuit of additions and multiplications. The first fully homomorphic scheme was discovered by Craig Gentry (Gentry 2010).

Instead of relying of addition and multiplication, another way known to get fully homomorphic encryption is to rely on the paradigm of functional circuits (Chillotti, Joye, and Paillier 2021). Within this paradigm, an encryption scheme can be fully homomorphic as long as it supports addition of ciphertexts and the evaluation of univariate functions on ciphertexts.

A fully homomorphic encryption scheme can in its more general form evaluate any given circuit. This may however require additional, usually public, key material. This extra key material is referred to as evaluation key material. It is produced by the key generation algorithm of the fully homomorphic encryption scheme.

In the case of fully homomorphic encryption, the distinction between symmetric-key encryption and public-key encryption is not that important as there are generic ways to efficiently convert a symmetric additively homomorphic encryption scheme into a public-key one; see e.g., (Rothblum 2011). The notation $\mathrm{Enc}_{sk}$ in this document indicates an encryption, e.g., with an encryption algorithm, where sk denotes a secret key.

The external product of ciphertexts is a core operation for fully homomorphic encryption. It defines the multiplication between two ciphertexts that are not necessarily in the same format. On input a ciphertext $c_1$ that encrypts a plaintext $\mu_1$ and a ciphertext $c_2$ that encrypts a plaintext $\mu_2$ under an associated encryption scheme, the external product denoted $\circledast$ returns the ciphertext $c_3 = c_1 \circledast c_2$ that encrypts $\mu_1 \cdot \mu_2$. Depending on the underlying encryption scheme (i.e., used for $c_1$), it is noted there may be restrictions on the subset of plaintexts that can be encrypted under the associated encryption scheme (i.e., used to have $c_2$). One such example of external product can be found in (Chillotti et al. 2020).

The external product, e.g., the ability to compute multiplications, is an important operation in fully homomorphic encryption schemes in their own right, however external products are also used extensively in an important application, namely the evaluation of an inner product in the exponent, or the related problem of the blind rotation. Using polynomial representations, given some polynomial domain $\mathcal{D}$, the inner product in the exponent (see e.g., (Bonnoron, Ducas, and Fillinger 2018)) is the homomorphic evaluation of $\chi^{\sum_{i=1}^{n} a_i s_i}$ (defined over $\mathcal{D}$) where $(a_1, \ldots, a_n)$ are public and $(s_1, \ldots, s_n)$ are secret. Note that writing $a = (a_1, \ldots, a_n)$ and $s = (s_1, \ldots, s_n)$, one has $\sum_{i=1}^{n} a_i s_i = \langle \mathbf{a}, \mathbf{s} \rangle$; hence the name inner product in the exponent for the evaluation of $\chi^{\sum_{i=1}^{n} a_i s_i}$. The blind rotation in a generic form is the homomorphic evaluation of $\chi^{\sum_{i=1}^{n} a_i s_i} w$ for some polynomial $w := w(x) = \sum_{i=0}^{N-1} w_i \, x^i \in \mathcal{D}$. As a typical application, the blind rotation can be used as a convenient way to implement a homomorphic look-up table with polynomials; see e.g., (Joye 2022). When coupled with a so-called bootstrapping operation, e.g., to reduce the noise in noisy ciphertexts, the homomorphic evaluation of a look-up table is also known as programmable bootstrapping; again see e.g., (Joye 2022). Since any univariate function (over a small domain) can always be expressed as a look-up table, an encryption scheme allowing homomorphic addition and homomorphic table look-up turns out to be fully homomorphic.

The most used method to compute an inner product in the exponent is the GINX method (Gama et al. 2016; Chillotti et al. 2020). In its original form, the GINX method only supports encryption schemes with binary keys. Extensions to larger key sets are presented in (Joye and Paillier 2022).

The following notations are used throughout this document. The ring of integers is denoted by $\mathbb{Z}$ and $[\![a, b]\!]$ represents the set of integers $x$ such that $a \leq x \leq b$. For a positive integer $q$, $\mathbb{Z}/q\mathbb{Z}$ represents the ring of integers modulo $q$. The real torus is denoted by $\mathbb{T}$ and is defined as $\mathbb{R}/\mathbb{Z}$ where $\mathbb{R}$ is the field of real numbers. For a positive integer $q$, $\mathbb{T}_q$ designates the discretized torus modulo $q$ and is defined as $\frac{1}{q}\mathbb{Z}/\mathbb{Z}$. For a real number $x$, $\lfloor x \rfloor$ designates the largest integer that is smaller than or equal to $x$ while $\lfloor x \rceil$ designates the rounding to the nearest integer (with some convention being taken in the case of a tie). For a ring $\mathcal{R}$, $(\mathcal{R})^{\times}$ represents the multiplicative group of $\mathcal{R}$; elements of $(\mathcal{R})^{\times}$ are called units. The notation $x \leftarrow a$ means that variable $x$ is assigned the value of $a$. Vectors are denoted by bold letters (e.g., **v**). For two vectors $\mathbf{u} = (u_1, \ldots, u_n)$ and $\mathbf{v} = (v_1, \ldots, v_n)$ of same dimension, $\langle \mathbf{u}, \mathbf{v} \rangle$ denotes the inner product of **u** and **v**; namely, $\langle \mathbf{u}, \mathbf{v} \rangle = \sum_{i=1}^{n} u_i\, v_i$. For a real number $a$, $|a|$ denotes its absolute value. The notation $\|\cdot\|_{\infty}$ represents the infinity norm; for polynomials or vectors of polynomials, the infinity norm is taken coefficient-wise. Morphisms are written with Greek letters-except letter $\mu$, which is reserved to denote a general plaintext ($\mu$). For two morphisms $\psi$ and $\phi$, the notation $\phi \circ \psi$ is used for their composition.

Additional notations will be introduced when needed.

A core operation in several homomorphic schemes and cryptographic is homomorphically evaluating an inner product in the exponent between a public vector a and a secret vector s. This is typically the case for e.g., the blind rotation (Alperin-Sheriff and Peikert 2014; Ducas and Micciancio 2015; Gama et al. 2016; Bonnoron, Ducas, and Fillinger 2018; Chillotti et al. 2020), but also for batched bootstrapping (Micheli et al. 2024), or circuit bootstrapping (Wang et al. 2024).

In an embodiment, a morphism-based method is proposed that, by removing most of the key switches, closes the gap with the computational efficiency of GINX, with no restriction on the secret vector distribution.

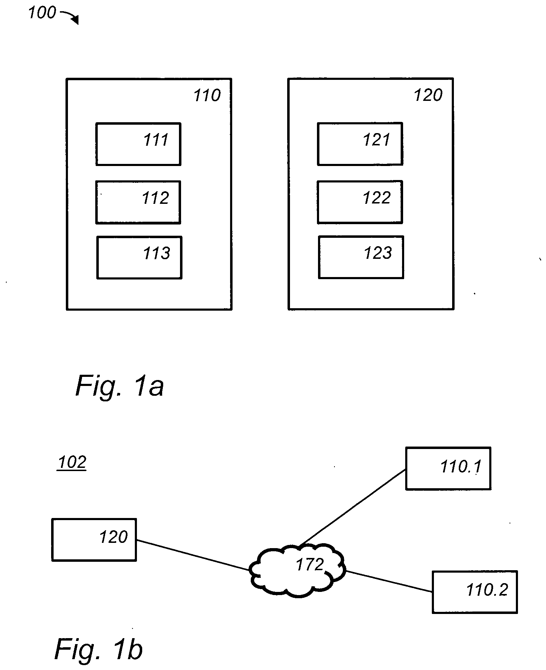

**Figure 1a** schematically shows an example of an embodiment of a data-provider device 110 and of an embodiment of an homomorphic computation device 120.

Data-provider device 110 and homomorphic computation device 120 may be part of a homomorphic computation system 100.

Homomorphic computation device 120 is configured to perform homomorphic computations, e.g., as outsourced to homomorphic computation device 120 by data-provider device 110. Data-provider device 110 is configured to initiate an homomorphic computation as homomorphic computation device 120. For example, data-provider device 110 may encrypt one or more input data, and prepare auxiliary key material, e.g., bootstrapping keys, and send encrypted data and auxiliary key material to homomorphic computation device 120. Received encrypted data and auxiliary key material may be used by a receiver to perform several homomorphic computations; these homomorphic computations typically involve bootstrappings or programmable bootstrappings using the auxiliary key material. The final encrypted result is then returned and/or stored.

Homomorphic computation system 100 is configured to perform homomorphic operations on encrypted data. Homomorphic encryption is a cryptographic method that allows mathematical operations to be performed on encrypted data without decrypting it, that is, without requiring access to the underlying plaintext. This means that computations like addition and multiplication can be carried out on ciphertexts, generating an encrypted result that, when decrypted, corresponds exactly to the result of those operations as if they had been performed on the original, unencrypted data. This property preserves the confidentiality of the data throughout processing, enabling secure computation on sensitive information by untrusted parties, such as cloud servers, without exposing the underlying plaintext. Homomorphic encryption is especially valuable for privacy-preserving applications, where secure data analysis and processing are required without compromising data integrity.

For example, homomorphic computation device 120 is designed to receive one or more packed ciphertexts that each encrypt multiple plaintexts, e.g., from data-provider device 110, and perform computations on the received encrypted plaintexts. Typically, the results are returned to data-provider device 110.

These encrypted plaintexts are typically lattice-based and may comprise noise. In particular, the encrypted plaintexts may be based on the Learning With Errors (LWE) problem or the Ring Learning With Errors (RLWE) problem, both generalizing to the General Learning With Errors (GLWE) problem. The packed ciphertext may comprise multiple elements, which may be taken from some ring, e.g., an integer or polynomial ring. The encrypted plaintexts may also be based on the Learning with Rounding (LWR) problem. The system may perform homomorphic operations on encrypted plaintexts, operating on multiple plaintexts simultaneously.

Data-provider device 110 is configured to encrypt plaintext data into one or more encrypted plaintexts and send them to homomorphic computation device 120. Data-provider device 110 may also generate and send auxiliary key material that computation system 100 use to perform homomorphic operations on the encrypted plaintexts, e.g., bootstrapping keys, key switching keys, and the like. Data-provider device 110 is configured to receive encrypted results from computation system 100 and decrypt the results. Key switching keys may be conventional; however, in an embodiment, a different type of bootstrapping key may be used.

Homomorphic computation device 120 is configured to perform various homomorphic operations on encrypted plaintexts. The encrypted plaintexts may be directly obtained from data-provider device 110, or they may be the result of previous homomorphic operations, e.g., the encrypted plaintexts may be intermediate results.

In an embodiment, homomorphic encryption is used by a data-provider device to securely offload or outsource computational tasks to a server, e.g., an homomorphic computation device, without compromising the privacy of the underlying data. For example, data-provider device 110 encrypts one or more input data and transfers the resulting ciphertext, e.g., the encrypted plaintexts, to the server. Homomorphic computation device 120 then performs computations on the encrypted data, producing encrypted results that data-provider device 110 can decrypt locally. This setup eliminates the need for high-performance computing hardware on the client side, as the computation can be executed on a more capable server. Furthermore, homomorphic encryption allows multiple data-provider devices to securely pool encrypted data for joint computation tasks, such as training machine learning models. For example, this approach is useful for collaborative learning, where different entities wish to jointly train a neural network model without sharing sensitive data in plaintext.

In another application, homomorphic computation device 120 can homomorphically evaluate a machine learning model, such as a neural network, on encrypted data provided by one or more data-provider devices. This setup allows data-provider devices to benefit from advanced AI models without exposing their raw data to the server. For instance, in medical data analysis, data-provider devices can send encrypted data to the server, which then applies a machine learning model to this data in its encrypted form. The result, still encrypted, is returned to the data-provider device for decryption, enabling insights without privacy compromise. For example, homomorphic computation device 120 may receive encrypted data, e.g., encrypted plaintexts, homomorphically evaluate a neural network on the received encrypted data, and obtain encrypted results. The encrypted results may then be sent to data-provider device 110.

Data-provider device 110 may comprise a processor system 111, a storage 112, and a communication interface 113. Homomorphic computation device 120 may comprise a processor system 121, a storage 122, and a communication interface 123.

In the various embodiments of communication interfaces 113 and/or 123, the communication interfaces may be selected from various alternatives. For example, the interface may be a network interface to a local or wide area network, e.g., the Internet, a storage interface to an internal or external data storage, an application interface (API), etc.

Data-provider device 110 and homomorphic computation device 120 are represented here as single devices, though either one, or both, could just as well be implemented as systems, e.g., a geographically distributed system, e.g., a cloud computing system, e.g., a system comprising multiple computers.

Storage 112 and 122 may be, e.g., electronic storage, magnetic storage, etc. The storage may comprise local storage, e.g., a local hard drive or electronic memory. Storage 112 and 122 may comprise non-local storage, e.g., cloud storage. In the latter case, storage 112 and 122 may comprise a storage interface to the non-local storage. Storage may comprise multiple discrete sub-storages together making up storage 112 and 122.

Storage 112 and/or 122 may be non-transitory storage. For example, storage 112 and/or 122 may store data in the presence of power, such as a volatile memory device, e.g., Random Access Memory (RAM). For example, storage 112 and/or 122 may store data in the presence of power as well as outside the presence of power, such as a non-volatile memory device, e.g., Flash memory. Storage may comprise a volatile writable part, say a RAM, and/or a non-volatile writable part, e.g., Flash. Storage may comprise a non-volatile non-writable part, e.g., ROM, e.g., storing part of the software.

Devices 110 and 120 may communicate internally, with each other, with other devices, external storage, input devices, output devices, and/or one or more sensors over a computer network. The computer network may be an internet, an intranet, a LAN, a WLAN, a WAN, etc. The computer network may be the Internet. Devices 110 and 120 may comprise a connection interface which is arranged to communicate within homomorphic computation system 100 or outside of homomorphic computation system 100 as needed. For example, the connection interface may comprise a connector, e.g., a wired connector, e.g., an Ethernet connector, an optical connector, etc., or a wireless connector, e.g., an antenna, e.g., a Wi-Fi, 4G, or 5G antenna.

Communication interface 113 may be used to send or receive digital data, e.g., encrypted data packets, bootstrapping keys, key switching keys, requests for computations, and encrypted computation results. Communication interface 123 may be used to send or receive digital data, e.g., encrypted input data, computation instructions, intermediate computation results, and final encrypted outputs for decryption by the data-provider device.

Data-provider device 110 and homomorphic computation device 120 may have a user interface, which may include well-known elements such as one or more buttons, a keyboard, a display, a touch screen, etc. The user interface may be arranged for accommodating user interaction for performing functions such as data encryption, initiating homomorphic computations, setting computation parameters, accessing and managing storage, viewing computation results, and configuring security settings.

The execution of devices 110 and 120 may be implemented in a processor system. Devices 110 and 120 may comprise functional units to implement aspects of embodiments. The functional units may be part of the processor system. For example, functional units shown herein may be. wholly or partially implemented in computer instructions that are stored in a storage of the device and executable by the processor system.

The processor system may comprise one or more processor circuits, e.g., microprocessors, CPUs, GPUs, etc. Devices 110 and 120 may comprise multiple processors. A processor circuit may be implemented in a distributed fashion, e.g., as multiple sub-processor circuits. For example, devices 110 and 120 may use cloud computing.

Typically, data-provider device 110 and homomorphic computation device 120 each comprise one or more microprocessors which execute appropriate software stored at the device; for example, that software may have been downloaded and/or stored in a corresponding memory, e.g., a volatile memory such as RAM or a non-volatile memory such as Flash.

Instead of using software to implement a function, devices 110 and 120 may, in whole or in part, be implemented in programmable logic, e.g., as field-programmable gate array (FPGA). The devices may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc. In particular, data-provider device 110 and homomorphic computation device 120 may comprise circuits, e.g., for cryptographic processing, and/or arithmetic processing.

In hybrid embodiments, functional units are implemented partially in hardware, e.g., as coprocessors, e.g., cryptographic coprocessors, and partially in software stored and executed on the device.

**Figure 1b** schematically shows an example of an embodiment of an homomorphic computation system 102. System 102 may comprise multiple data-provider devices; shown are data-provider devices 110.1 and 110.2. Homomorphic computation system 100 may comprise multiple homomorphic computation devices, although only one is shown: homomorphic computation device 120. The devices are connected through a computer network 172, e.g., the Internet. Data-provider device 110 and homomorphic computation device 120 may be according to an embodiment.

Homomorphic computation system 102 enables multiple data-provider devices, such as data-provider devices 110.1 and 110.2, to securely interact with an homomorphic computation device 120 over a computer network 172, such as the Internet, e.g., to outsource computation work, or to perform joint computations on encrypted data, and the like. Each data-provider device encrypts its data locally and sends the encrypted data, along with any necessary auxiliary key material, to homomorphic computation device 120. The homomorphic computation device then performs homomorphic computations on the encrypted data, processing inputs from one or multiple data-provider devices without ever decrypting them, thus preserving data privacy throughout the operation.

Once the computations are complete, homomorphic computation device 120 may send the encrypted results back to each respective data-provider device for decryption and local interpretation. This setup is valuable for secure, distributed data analysis across entities, such as hospitals analyzing patient data jointly or other institutions working on sensitive data.

An embodiment comprises performing computations using fully homomorphic encryption (FHE). First, one or more encrypted data items are received from a data provider device. These data items are encrypted using an encryption key specific to the data provider device. After receipt, the encrypted data undergoes a series of homomorphic operations to implement the required computation. This produces encrypted result data, which can either be stored for subsequent processing or transmitted to another device for further computations. Throughout this process, the data remains encrypted, ensuring that its confidentiality is preserved.

To implement such a method, an homomorphic computation system may comprise two components: a data-provider device and an homomorphic computation device. The data-provider device is responsible for encrypting the input data using FHE encryption keys and preparing auxiliary key materials such as bootstrapping keys or key-switching keys. Once encrypted, the data and key material are sent to the homomorphic computation device, which is configured to perform operations directly on the encrypted inputs. The operations can include basic arithmetic, such as addition and multiplication, or more complex processes like polynomial evaluations, machine learning models, e.g., neural networks, and many others. The results of these computations remain in encrypted form and can either be stored locally or forwarded for further processing.

For instance, in a medical application, patient health metrics can be encrypted on a data-provider device, such as a hospital server, and sent to a cloud-based homomorphic computation device for secure processing. The computations, such as predicting the likelihood of a condition using statistical models, are performed without exposing the sensitive data. The encrypted results are returned to the hospital for decryption and interpretation.

An embodiment comprises neural network evaluation. Using FHE, a neural network model can process encrypted inputs, such as images, videos, or audio fragments, and produce encrypted outputs. For example, the neural network may classify or generate data in its encrypted form without ever accessing the plaintext. For example, an encrypted medical image, such as an X-ray, can be processed by a convolutional neural network running on the homomorphic computation device to detect abnormalities. The output, still encrypted, is sent back to the data provider for decryption, preserving the privacy of the image throughout the analysis.

The neural network may act as a classifier or a generator depending on the application. A classifier might categorize encrypted inputs into distinct groups, such as determining whether encrypted satellite images indicate the presence of specific land features.

The encrypted data provided by the data-provider device can span various modalities, including images, videos, and audio. For instance, encrypted CT scans may be analyzed for anomalies, encrypted surveillance footage may be processed for motion detection, or encrypted audio fragments may undergo sentiment analysis. Such applications demonstrate the versatility and security of FHE in enabling computations on sensitive data without exposing the plaintext, making it especially valuable in privacy-critical domains like healthcare, finance, and collaborative machine learning. Alternatively, a generator could produce encrypted synthetic outputs, such as creating encrypted video frames from encrypted raw inputs.

For example, encrypted video frames captured by drones might be processed by a generative adversarial network (GAN) operating on the homomorphic computation device to reconstruct missing segments or enhance low-quality footage. Similarly, encrypted financial data may be used to generate encrypted synthetic datasets for use in collaborative analytics while preserving confidentiality.

Below several embodiments are given for an external product parametrized by a morphism, and applications thereof to computing an inner product in the exponent, bootstrapping, programmable bootstrapping, amongst others.

Let $\text{Enc}_{\text{sk}}: \mathcal{M} \to \mathcal{C}$, $\mu \mapsto \mathbf{C} = \text{Enc}_{\text{sk}}(\mu)$ being an additively homomorphic encryption algorithm parametrized by a key $\text{sk} \in X$ that on input a plaintext message $\mu \in \mathcal{M}$ returns a ciphertext $\mathbf{C} \in \mathcal{C}$. Message space $\mathcal{M}$ is viewed as an $\bar{\mathcal{M}}$-module for some ring $\bar{\mathcal{M}}$. Typically, $\mathcal{M}$ is a polynomial structure, e.g., a polynomial space, though this is not required. The space $\bar{\mathcal{M}}$ may be the same as $\mathcal{M}$ though this is not required.

Encryption algorithm Enc is equipped with an external product $\circledast$, meaning that there exists an auxiliary algorithm $\text{Enc}^{\circledast}$ such that

$$(\text{EQ 1:}) \quad \text{Enc}_{\text{sk}}(\mu) \circledast \text{Enc}_{\text{sk}}^{\circledast}(\bar{\mu}) = \text{Enc}_{\text{sk}}(\mu \cdot \bar{\mu})$$

for (a non-empty subset of) elements $\bar{\mu} \in \bar{\mathcal{M}}$. We will refer to encryption $\text{Enc}_{\text{sk}}(\mu)$, as the main encryption. We will refer to encryption

$$\text{Enc}_{\text{sk}}^{\circledast}(\bar{\mu})$$

as the main auxiliary encryption. The external product $\circledast$ will be referred to as the main external product. To obtain an encryption according to the main encryption or the main auxiliary encryption a corresponding main encryption algorithm or main auxiliary encryption algorithm may be used. However, encrypted plaintexts may also be obtained as a result of homomorphic operations. One may refer to an encrypted plaintext that is of main encryption type, or main auxiliary encryption type, if the encrypted plaintext may be decrypted with a decryption algorithm associated with the main encryption, or main auxiliary encryption, respectively.

Let also $\psi$ be a non-trivial morphism, that is, wherein morphism $\psi$ is not equal to the identity map. The morphism is defined over the message space $\mathcal{M}$, the key space X, and the ciphertext space $C$. In particular, the morphism maps an element of any of these spaces to the same space. Further a morphism satisfies the relation

$$\psi\big(\text{Enc}_{\text{sk}}(\mu)\big) = \text{Enc}_{\psi(\text{sk})}\big(\psi(\mu)\big) \ .$$

Graphically, one has the following commutative diagram

$$
\begin{array}{ccc}
\mu \in \mathcal{M} & \xrightarrow{\text{Enc}_{\text{sk}}} & \mathbf{C} \in \mathcal{C} \\
\psi \downarrow & & \downarrow \psi \\
\psi(\mu) \in \mathcal{M} & \xrightarrow{\text{Enc}_{\psi(\text{sk})}} & \text{Enc}_{\psi(\text{sk})}\big(\psi(\mu)\big) = \psi(\mathbf{C}) \in \mathcal{C}
\end{array}
$$

A method is proposed for the homomorphic evaluation of $\text{Enc}_{\text{sk}}(\psi(\mu)\bar{\mu})$ using a new operator $\circledast_{\psi}$ from a first ciphertext ($\text{Enc}_{\text{sk}}(\mu)$) and a second modified auxiliary ciphertext (

$$\text{Enc}_{\text{sk}}^{\circledast, \psi}(\bar{\mu})$$

). We will refer to the modified auxiliary ciphertext as a further auxiliary encryption, and the new external product $\circledast_{\psi}$, as a

further external product. Note that the further auxiliary encryption, and the further external product are both parametrized by the morphism. By selecting a different morphism, a different further auxiliary encryption, and further external product may be obtained.

Given a first plaintext $\mu$, and a second plaintext $\bar{\mu}$, we have the following relation

$$\text{(EQ 2:)} \qquad \text{Enc}_{\text{sk}}(\psi(\mu) \cdot \bar{\mu}) = \text{Enc}_{\text{sk}}(\mu) \circledast_\psi \text{Enc}_{\text{sk}}^{\circledast,\psi}(\bar{\mu})$$

That is, given a first plaintext $\mu$ encrypted according to the main encryption, e.g., of main encryption type, and a second plaintext $\bar{\mu}$, encrypted according to the further auxiliary encryption, e.g., of further auxiliary encryption type, then the further external product produces an encryption of the product between the morphism applied to the first plaintext, and the second plaintext. The latter encryption is according to the main encryption, e.g., of main encryption type.

Note that the further external product and the main external product are similar in that the further external product almost produces an encryption of the product, just like the main external product does, but inserts an additional application of a morphism.

To get the same result using only the conventional main external product and main auxiliary encryption, one would typically perform the following operations: 1) apply the morphism to the first encrypted plaintext, that is to $\text{Enc}_{\text{sk}}(\mu)$, the result would be $\text{Enc}_{\psi(\text{sk})}(\psi(\mu))$ 2) key switch from key $\psi(\text{sk})$ to sk 3) compute the external product

$$\text{Enc}_{\text{sk}}(\psi(\mu)) \circledast \text{Enc}_{\text{sk}}^{\circledast}(\bar{\mu}) = \text{Enc}_{\text{sk}}(\psi(\mu) \cdot \bar{\mu})$$

Note that now a key switch is required which is not needed when using EQ 2. As key switches are costly operations, this significantly speeds up operations. The inventors realized that the computing $\psi(\mu) \cdot \bar{\mu}$ under main encryption, starting from a first plaintext $\mu$ encrypted under the main encryption is actually a common operation. In particular this operation occurs frequently when computing an inner product in the exponent.

The further external product may be defined as

$$\text{Enc}_{\text{sk}}(\mu) \circledast_\psi \text{Enc}_{\text{sk}}^{\circledast,\psi}(\bar{\mu}) :=$$

$$\psi\big(\text{Enc}_{\text{sk}}(\mu)\big) \circledast \text{Enc}_{\text{sk}}^{\circledast,\psi}(\bar{\mu}).$$

. That is, given an algorithm to compute main external product, one can also compute the further external product, e.g., by applying the morphism to the first operand, and then performing the main external product.

Finally, the further auxiliary encryption and where $\text{Enc}^{\circledast,\psi}$ is defined by the relation

$$\text{Enc}_{\psi(\text{sk})}^{\circledast,\psi}(\bar{\mu}) := \text{Enc}_{\psi(\text{sk})}^{\circledast}(\bar{\mu}),$$

i.e., $\text{Enc}^{\circledast,\psi}$ coincides with $\text{Enc}^{\circledast}$ when both algorithms are parametrized by $\psi(\text{sk})$. For a morphism $\psi$ that is in fact an automorphism, e.g., bijective, this is clear, however even for a morphism that is not an automorphism, this relation may be sufficient.

Removing the need to apply key switches not only removes an important additional cost in the computation, it also avoids a source of noise to the final output. Managing noise in homomorphic encryption schemes is important.

As a side note, one has to remark that when applied to the inner product in the exponent based on automorphisms, including for the blind rotation, previously known approaches attempted to reduce the number of key switches. In this sense, the proposed embodiment is optimal as there is zero key switch.

The above explanation is described from the point of view of a symmetric homomorphic encryption scheme. The technique nevertheless equally applies to public encryption schemes as the resulting ciphertexts share the same output format. In particular, this is the case when the public-key encryption of a plaintext $\mu$ is obtained as a symmetric encryption of 0 to which is added to a trivial encryption of $\mu$; the symmetric encryption of 0 being derived from the public encryption key.

In both case, symmetric and asymmetric homomorphic encryption, the above formulas apply unchanged. For the symmetric case, the secret key is interpreted as symmetric encryption and decryption key. For the asymmetric case, the secret key is interpreted as the secret decryption key, e.g., the private key.

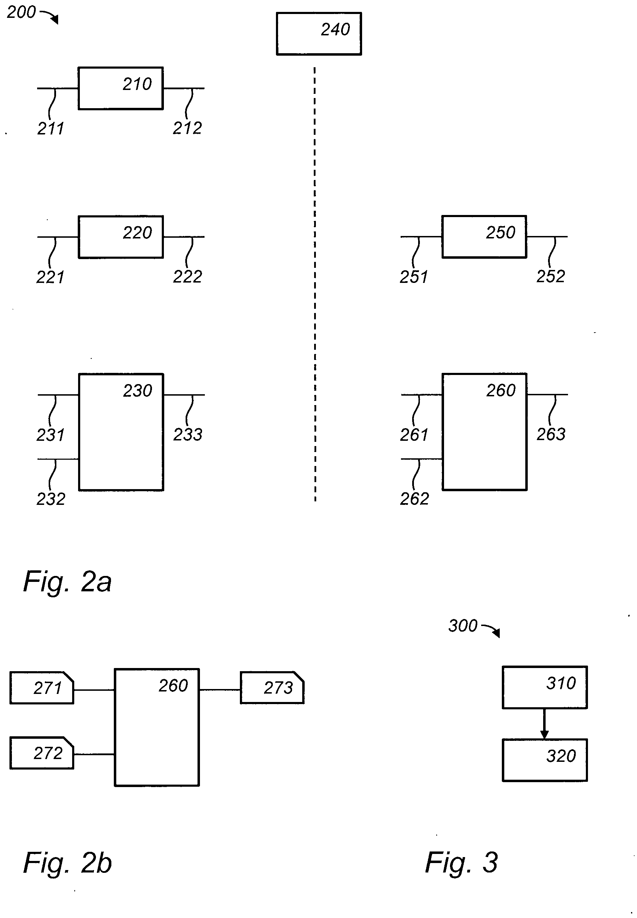

**Figure 2a** schematically shows an example of an embodiment of operations in an homomorphic encryption scheme 200. The homomorphic encryption scheme 200 supports computation on encrypted data.

Scheme 200 defines a main encryption 210, which encrypts a plaintext 211 to produce an output 212, where output 212 is plaintext 211 encrypted according to main encryption 210. For example, a main encryption algorithm may be provided that encrypts plaintext 211, producing encrypted plaintext 212. However, an encrypted plaintext may also be obtained as a result of an homomorphic operation performed on other encrypted plaintexts, e.g., intermediate values. In fact, in some embodiments, the majority of data encrypted according to the main encryption will be obtained as intermediate values.

With access to the secret key sk, encrypted plaintext 212 could be decrypted to recover plaintext 211. However, an homomorphic computation device, e.g., homomorphic computation device 120, performing the homomorphic computations would not have access to the secret key and would not be able to decrypt ciphertext 212. The homomorphic computation device may be able to obtain encrypted values, e.g., trivial encryptions that do not require the secret key, or, if the homomorphic encryption is asymmetric. Main encryption 210 is written as: $\text{Enc}_{sk}$.

Scheme 200 further defines a main auxiliary encryption 220, which encrypts a plaintext 221 to produce an encrypted plaintext 222 according to the main auxiliary encryption.

For example, a main auxiliary encryption algorithm may be provided that encrypts plaintext 221, producing encrypted plaintext 222. An encrypted plaintext according to the main auxiliary encryption algorithm could be obtained as a result of a homomorphic operation performed on an homomorphic computation device. Typically, however, the data encrypted according to the main auxiliary encryption is obtained from a client, e.g., from data-provider device 110. Main auxiliary encryption algorithm 220 is additively homomorphic, e.g., the sum of two encrypted plaintexts is an encryption of the sum of the plaintexts. Main auxiliary encryption 220 is written as:

$$\text{Enc}_{sk}^{\circledast}.$$

The $\circledast$ superscript refers to the external product associated with main auxiliary encryption 220.

Scheme 200 includes a main external product operation 230, defined between a first encrypted operand 231 encrypted with the main encryption and a second encrypted operand 232 encrypted with the main auxiliary encryption. This operation produces an encrypted output 233 that reflects the external product result, encrypted according to main encryption 210.

In particular, in an embodiment, main external product 230 between a first plaintext ($\mu$) encrypted with main encryption 210 ($\text{Enc}_{sk}(\mu)$) and a second plaintext ($\bar{\mu}$) encrypted with main auxiliary encryption 220 (

$$\text{Enc}_{sk}^{\circledast}(\bar{\mu})$$

) equals a product of the first plaintext and the second plaintext ($\bar{\mu}$) encrypted with the main encryption (

$$\text{Enc}_{sk}(\mu) \circledast$$

$$\text{Enc}_{sk}^{\circledast}(\bar{\mu}) = \text{Enc}_{sk}(\mu \cdot \bar{\mu})$$

).

Homomorphic encryption schemes having the above features, including a main encryption, main auxiliary encryption, and main external product, are fully homomorphic, e.g., because these elements can be used to build a programmable bootstrap. In an embodiment, a morphism $\psi$ of this homomorphic encryption scheme is selected, This morphism maps elements of the message space to itself, the ciphertext space to itself, and the key space to itself. Moreover, the morphism satisfies a commutativity relationship namely that $\psi(\text{Enc}_{sk}(\mu)) = \text{Enc}_{\psi(sk)}(\psi(\mu))$. In an embodiment, such a morphism is used to define further operations that incorporate the morphism into an external product 'for free', that is, without having to perform an additional key switch. In Figure 2a, the morphism is represented by box 240.

It is not a requirement that the morphism is an automorphism. However, an automorphism, e.g., a bijective morphism, is a good choice for the morphism.

In an embodiment, the plaintext space is a polynomial structure, e.g., a polynomial space, while the key and ciphertext spaces are vectors over polynomial spaces. Typically the polynomial space is, that is the plaintext message

space is $\mathcal{M} = \mathcal{R}_q$, wherein $\mathcal{R} = \mathbb{Z}[x]/\langle F(x) \rangle$ and $\mathcal{R}_q = \mathcal{R}/q\mathcal{R}$, and $q, t < q$, and $k$ are positive integers and $F$ is an irreducible polynomial. In this case, the key space is typically $\mathcal{K} = \mathcal{R}^k$, and the ciphertext space is typically

$$ \mathcal{C} = \mathcal{R}_q^{k+1}. $$

By abuse of notation, over the torus, $\mathcal{R} = \mathbb{T}[x]/\langle F(x) \rangle$ and $\mathcal{R}_q$ refers to $\mathbb{T}_q[x]/\langle F(x) \rangle$. Although not required, in one construction, a morphism on the plaintext space may be extended component wise to the key and ciphertext spaces. For example, the non-trivial morphism maps $x$ to $x^u$ wherein $u$ is a positive integer unequal to 1. For example, in a practically important example, the irreducible polynomial $F$ is a cyclotomic polynomial, e.g., the $M$-th cyclotomic polynomial $\Phi_M$. For example, wherein $M = 2N$ with $N$ a power of two and $\Phi_M(x) = x^N + 1$. In the latter case, any odd number $u$ will define a morphism that maps $x \to x^u$. A practical choice is $u = 5$, as it gives a morphism with order $N/2$.

Note that defining a morphism for $x$, specifies the morphism for all polynomials. The morphism allows transformations of encrypted data while preserving the structure necessary for further computations.

Interestingly, given morphism 240, new operations can be defined: a further auxiliary encryption 250, and a further external product 260. These operations are parametrized by the morphism, in the sense that choosing a different morphism produces different further operations.

Specifically, a further auxiliary encryption 250 is defined, which encrypts plaintext 251 to produce an encrypted plaintext 252, and a further external product 260 defined between a first plaintext ($\mu$) encrypted with the main encryption ($\mathrm{Enc}_{sk}$) and a second plaintext ($\bar{\mu}$) encrypted with the further auxiliary encryption (

$$ \mathrm{Enc}_{sk}^{\circledast, \psi} $$

).

For example, a further auxiliary encryption algorithm may be provided that encrypts plaintext 251, producing encrypted plaintext 252. An encrypted plaintext according to the further auxiliary encryption could be obtained as a result of an homomorphic operation performed on an homomorphic computation device. Typically, however, the data encrypted according to the further auxiliary encryption is obtained from a client, e.g., from data-provider device 110. The further auxiliary encryption algorithm 250 is additively homomorphic, e.g., the sum of two encrypted plaintexts is an encryption of the sum of the plaintexts.

The further auxiliary encryption has the property that encrypting a plaintext ($\bar{\mu}$) under a transformed secret key with respect to the morphism (

$$ \mathrm{Enc}_{\psi(sk)}^{\circledast, \psi}(\bar{\mu}) $$

) using the further auxiliary encryption equals the encryption of said plaintext ($\bar{\mu}$) using the main auxiliary encryption according to the secret key transformed with the morphism ($\psi(sk)$), that is

$$ \mathrm{Enc}_{\psi(sk)}^{\circledast, \psi}(\bar{\mu}) := \mathrm{Enc}_{\psi(sk)}^{\circledast}(\bar{\mu}). $$

This property can be used to define the further auxiliary encryption. In particular, for an automorphism, the operation is defined for all keys.

The further external product between a first plaintext encrypted with the main encryption ($\mathrm{Enc}_{sk}$) and a second plaintext encrypted with the further auxiliary encryption (

$$ \mathrm{Enc}_{sk}^{\circledast, \psi} $$

) equals the main external product between the morphism applied to the encrypted first plaintext ($\psi(\mathrm{Enc}_{sk}(\mu))$), and the second plaintext encrypted with the further auxiliary encryption (

$$\mathrm{Enc}_{\mathrm{sk}}^{\circledast,\psi}(\bar{\mu})$$

). That is one has the relation

$$\mathrm{Enc}_{\mathrm{sk}}(\mu) \circledast_\psi \mathrm{Enc}_{\mathrm{sk}}^{\circledast,\psi}(\bar{\mu}) := \psi\big(\mathrm{Enc}_{\mathrm{sk}}(\mu)\big) \circledast \mathrm{Enc}_{\mathrm{sk}}^{\circledast,\psi}(\bar{\mu}).$$

Note that this defines the further external product in terms of the main external product.

It can be verified mathematically, that the above constructions allows computations of the type

$$\mathrm{Enc}_{\mathrm{sk}}(\psi(\mu) \cdot \bar{\mu}) = \mathrm{Enc}_{\mathrm{sk}}(\mu) \circledast_\psi \mathrm{Enc}_{\mathrm{sk}}^{\circledast,\psi}(\bar{\mu}).$$

The is allows computation of $\psi(\mu) \cdot \bar{\mu}$ in encrypted form, starting from $\mu$ and $\bar{\mu}$ in encrypted form. Moreover, this computation does not involve a key switch, in particular not between the secret key (sk) and the same key transformed with the morphism ($\psi$(sk)).

**Figure 2b** schematically shows an example of an embodiment of homomorphically computing an external product parametrized by a morphism. Figure 3 schematically shows an example of an embodiment of a method 300 for homomorphically computing an external product parametrized by a morphism.

Method 300, which may be implemented on a computer, comprises:

obtaining 310 a first plaintext encrypted according to the main encryption (271, $\mathrm{Enc}_{\mathrm{sk}}(\mu)$), and a second plaintext encrypted according to the further auxiliary encryption (272,

$$\mathrm{Enc}_{\mathrm{sk}}^{\circledast,\psi}(\bar{\mu})$$

), the first plaintext and the second plaintext being encrypted according to the same key (sk), and

applying 320 the further external product (260) to the first plaintext encrypted according to the main encryption and to the second plaintext encrypted according to the further auxiliary encryption to obtain an encryption (273) of the product of the morphism applied to the first plaintext and of the second plaintext ($\psi(\mu)\bar{\mu}$) according to the same key (sk).

Figure 2b shows ciphertext 271, which is a first plaintext encrypted according to the main encryption, and ciphertext 272, which is a second plaintext encrypted according to the further auxiliary encryption. By applying further external product 260, a ciphertext 273 is obtained. Ciphertext 273 is a plaintext encrypted according to the main encryption and encrypts the product of morphism 240 applied to the plaintext encrypted by ciphertext 271 and of the plaintext encrypted by ciphertext 272. Ciphertext 271 is often an intermediate result, though it could be received from the client as well. Typically, ciphertext 272 is obtained from the client, though not strictly necessarily so.

Ciphertext 273 may be used in subsequent homomorphic computations. Ciphertext 273 and/or subsequent homomorphic computation results may be returned to the data-provider device. For example, ciphertext 273 may be the result of a neural network computation, or part of the result. For example, ciphertext 273 may be the result of a computation outsourced from a data-provider device to an homomorphic computation device, or part of the result.

As mentioned, the proposed subject matter has great generality and can be applied to many homomorphic encryption schemes, provided they have a main encryption, main auxiliary encryption, a main external product, and a morphism. Below, examples are given of such homomorphic encryption schemes. Applications of the further external product are also provided.

**First example embodiment**

The first example embodiment considers GLWE-type encryption as for example in (Stehl6 et al. 2009; Lyubashevsky, Peikert, and Regev 2010; Langlois and Stehle 2015); here, GLWE stands for generalized LWE encryption and LWE refers to learning with errors (Regev 2009).

Let $q, t < q$, and $k$ be positive integers; $q$ is called the ciphertext modulus, $t$ defines the cleartext space, and $k$ is called the rank. For $N$ a power of two, let also $\mathcal{R} = \mathbb{Z}[x]/\langle x^N + 1 \rangle$ and $\mathcal{R}_q = \mathcal{R}/q\mathcal{R}$. The plaintext message space is

$\mathcal{M} = \mathcal{R}_q$ , the key space is $\mathcal{K} = \mathcal{R}^k$ , and the ciphertext space

$$\mathcal{C} = \mathcal{R}_q^{k+1}.$$

$\bar{\mathcal{M}}$ may be $\mathcal{R} = \mathbb{Z}[x]/\langle x^N + 1 \rangle$

For example, a practical value for $q$ is $2^{64}$, or perhaps $2^{32}$ for a smaller instantiation. However, other values of $q$, both prime, prime powers, or any other positive integer is possible.

Define $\Delta = \lfloor q/t \rfloor$. For GLWE encryption, cleartexts are polynomials in $\mathcal{R}$ with coefficients in $[\![0, t-1]\!]$. Prior to encryption, a cleartext message has first to be encoded as an element of the plaintext message space. For a cleartext message m, this is done as $\mu \leftarrow \Delta \cdot m \in \mathcal{M}$ .

A GLWE ciphertext encrypting a message $\mu \in \mathcal{R}_q$ under private key s = $(s_1, \dots, s_k) \in \mathcal{R}^k$ is given by

$$\mathrm{GLWE}_{\mathbf{s}}(\mu) \leftarrow \left( a_1, \dots, a_k, b = \sum_{j=1}^{k} a_j \cdot s_j + \mu + e \right) \quad \in \mathcal{R}_q^{k+1}$$

where $a_1, \dots, a_k$ are polynomials randomly drawn in $\mathcal{R}_q$ and e $\in \mathcal{R}$ is some noise polynomial whose coefficients have small amplitude. For example, the coefficients $e_i$ of e may be less than a bound, e.g., $0 \le e_i \le \eta$, or $|e_i| \le \eta$, e.g., with $\eta$ a small positive integer, typically $\eta = 1$, but other values are possible. Note that the values of the secret key are not restricted as in some conventional systems. In particular, the digits of the secret key are not required to be binary or ternary values.

It can be easily checked that GLWE is additively homomorphic: for two plaintexts $\mu_1, \mu_2 \in \mathcal{R}_q$ , $\mathrm{GLWE}_s(\mu_1)$ + $\mathrm{GLWE}_s(\mu_1) \leftarrow \mathrm{GLWE}_s(\mu_1 + \mu_2)$. Note that if $e_1$ and $e_2$ respectively denote the noise present in $\mathrm{GLWE}_s(\mu_1)$ and $\mathrm{GLWE}_s(\mu_2)$, then the noise present in $\mathrm{GLWE}_s(\mu_1 + \mu_2)$ is $e_1 + e_2$, which is small if both $e_1$ and $e_2$ are small.

The auxiliary algorithm Enc® is built from the generalized GSW encryption algorithm (or GGSW in short). GSW stands for the names of the inventors of the GSW encryption (Gentry, Sahai, and Waters 2013). Following the presentation of (Micciancio and Polyakov 2021), the simplest way to view GGSW ciphertexts is through gadget decomposition of GLWE ciphertexts. Given a gadget vector $\mathbf{g} = (g_1, \dots, g_\ell) \in \mathcal{R}_q^\ell$, the corresponding Gadget-GLWE ciphertext of $\bar{\mu} \in \mathcal{R}$ under private key s = $(s_1, \dots, s_k) \in \mathcal{R}^k$ is defined as

(EQ 3):

$$\mathrm{GLWE}_{\mathbf{s}}^{\nabla}(\bar{\mu}) \leftarrow \left( \mathrm{GLWE}_{\mathbf{s}}(g_1 \cdot \bar{\mu}), \dots, \mathrm{GLWE}_{\mathbf{s}}(g_\ell \cdot \bar{\mu}) \right) .$$

The term $\mathrm{GLWE}_{\mathbf{s}}^{\nabla}(\bar{\mu})$ may be referred to a Gadget GLWE. The multiplications $g_i \cdot \bar{\mu}$ are regular (polynomial) multiplications performed mod $q$.

This leveled encryption gives rise to a GGSW ciphertext

(EQ 4):

$$\mathrm{GGSW}_{\mathbf{s}}(\bar{\mu}) \leftarrow \left( \mathrm{GLWE}_{\mathbf{s}}^{\nabla}(-s_1 \cdot \bar{\mu}), \dots, \mathrm{GLWE}_{\mathbf{s}}^{\nabla}(-s_k \cdot \bar{\mu}), \mathrm{GLWE}_{\mathbf{s}}^{\nabla}(\bar{\mu}) \right) .$$

GGSW ciphertext $\mathrm{GGSW}_s(\bar{\mu})$ may be seen as a matrix, with each element corresponding to a row of the matrix. For example, the matrix could be implemented as one long, flat array

Gadgets decompose elements as vectors of small pieces whose inner product with the gadget vector reconstructs (an approximation of) the original elements. Applied to a polynomial $f \in \mathcal{R}_q$ , the gadget decomposition of $f$ with respect to gadget vector $\mathbf{g} = (g_1, \ldots, g_\ell)$ is given by a vector $\nabla f \in \mathcal{R}^\ell$ such that $\langle \nabla f, \mathbf{g} \rangle \approx f$; see e.g., (Chillotti et al. 2020; Bernard and Joye 2024). When there is equality, the gadget decomposition is termed exact. In an embodiment, the elements of a gadget vectors $\mathbf{g} = (g_1, \ldots, g_\ell) \in \mathcal{R}_q^\ell$ are constants, though seen as polynomials, e.g., powers of an integer, typically powers of 2. There are various approaches to obtaining gadget vectors, e.g., using a radix-based approach.

Interestingly, a GGSW ciphertext can be combined with a GLWE ciphertext to yield another GLWE ciphertext (Chillotti et al. 2020) through an external product $\circledast$. Specifically, given $\mathrm{GLWE}_s(\mu)$ and $\mathrm{GGSW}_s(\bar{\mu})$ as in EQ. 1 and EQ. 2, their external product is defined as

$$\mathrm{GLWE}_{\mathbf{s}}(\mu) \circledast \mathrm{GGSW}_{\mathbf{s}}(\bar{\mu}) :=$$
$$\langle \nabla b, \mathrm{GLWE}_{\mathbf{s}}^{\nabla}(\bar{\mu}) \rangle + \sum_{j=1}^{k} \langle \nabla a_j, \mathrm{GLWE}_{\mathbf{s}}^{\nabla}(-s_j \cdot \bar{\mu}) \rangle \ .$$

It can be verified that $\mathrm{GLWE}_s(\mu) \circledast \mathrm{GGSW}_s(\bar{\mu}) \leftarrow \mathrm{GLWE}_s(\mu \cdot \bar{\mu})$. Indeed, from the definition of the gadget decomposition, one gets

$$\mathrm{GLWE}_{\mathbf{s}}(\mu) \circledast \mathrm{GGSW}_{\mathbf{s}}(\bar{\mu}) \quad := \langle \nabla b, \mathrm{GLWE}_{\mathbf{s}}^{\nabla}(\bar{\mu}) \rangle + \sum_{j=1}^{k} \langle \nabla a_j, \mathrm{GLWE}_{\mathbf{s}}^{\nabla}(-s_j \cdot \bar{\mu}) \rangle$$
$$= \mathrm{GLWE}_{\mathbf{s}}(b \cdot \bar{\mu}) + \sum_{j=1}^{k} \mathrm{GLWE}_{\mathbf{s}}(-a_j \, s_j \cdot \bar{\mu})$$
$$\approx \mathrm{GLWE}_{\mathbf{s}}\left(\left(b - \sum_{j=1}^{k} a_j \, s_j\right) \cdot \bar{\mu}\right)$$
$$\in \mathrm{GLWE}_{\mathbf{s}}(\mu \cdot \bar{\mu})$$

provided (i) that the gadget decomposition is sufficiently exact and (ii) that $\|e \cdot \bar{\mu}\|_\infty$ is sufficiently small where e is the noise error present in $\mathrm{GLWE}_s(\mu)$. The exactness of the gadget decomposition can be controlled by the selection of the parameters defining the GLWE encryption scheme while the smallness of the magnitude of $e \cdot \bar{\mu}$ can be controlled by restricting $\bar{\mu}$ to polynomials of small magnitude. Examples of polynomials of small magnitude in $\mathcal{R}_q$ are monomials of the form $x^d$ for some integer d. In particular, it turns out that encryption algorithm GLWE is equipped with an external product $\circledast$ for plaintexts $\bar{\mu}$ of the form $x^d$.

In other words, the requirements of EQ 1 are satisfied taking $\mathrm{GLWE}_s(\mu)$ for $\mathrm{Enc}_{sk}(\mu)$, $\mathbf{s}$ for sk, $\mathrm{GGSW}_s(\bar{\mu})$ for

$$\mathrm{Enc}_{\mathrm{sk}}^{\circledast}(\bar{\mu}),$$

taking the above external product for $\circledast$, and $\mathrm{GLWE}_s(\mu \cdot \bar{\mu})$ for $\mathrm{Enc}_{sk}(\mu \cdot \bar{\mu})$. Using the construction described any morphism can thus be used to define a further auxiliary encryption and a corresponding further external product that incorporates the morphism.

When $N$ is a power of two, polynomial $x^N + 1$ is the $2N$-th cyclotomic polynomial. Recall that $\mathcal{R}_q = (\mathbb{Z}/q\mathbb{Z})[x]/\langle x^N + 1 \rangle$ where $N$ is a power of two. Modulo $x^N + 1$, variable $x$ can be seen as a $2N$-th root of unity since $x^{2N} = (-1)^2 = 1 \pmod{x^N + 1}$. An automorphism $\tau_u$ takes as input a polynomial $f \in \mathcal{R}_q$ and returns the polynomial where variable $x$ is replaced with $x^u$ for some unit $u \in (\mathbb{Z}/2N\mathbb{Z})^\times$; the latter set are exactly the odd integers in this ring. This is written

$$\tau_u \colon \mathcal{R}_q \to \mathcal{R}_q, f := f(x) \mapsto \tau_u(f) := f(x^u) \ .$$

Note that any automorphism, such as $\tau_u$, is also a morphism. Using the notation following EQ 1, $\tau_u$ can take the place of morphism $\psi$.

For a vector **v** (resp. matrix **M)** over $\mathcal{R}_q$ , the automorphism is applied to each component; this is written $\tau_u(\mathbf{v})$ (resp. $\tau_u(\mathbf{M})$).

**Example 1.** Suppose $N = 8$ and $f := f(x) = x^7 - 2x^3 + x + 1$. For $u = 3$, one has

$$\tau_3(f) := \tau_3(f)(x) \quad = (x^3)^7 - 2(x^3)^3 + x^3 + 1$$
$$= x^5 + x^3 + 2x + 1 \ (\mathrm{mod}\ x^8 + 1) \ .$$

Note that modulo $x^8 + 1$, it holds that $x^8 = -1$. Hence $(x^3)^7 = x^{21} = x^{2\cdot8} x^5 = (-1)^2 x^5 = x^5$ and, similarly, $(x^3)^3 = x^9 = x^8 x = (-1)x = -x$.

It can be verified that $\tau_u(\mathrm{GLWE}_s(\mu)) = \mathrm{GLWE}_{\tau_{u(s)}}(\tau_u(\mu))$, which is an example of $\mathrm{Enc}_{\psi(\mathrm{sk})}(\psi)(\mu))$. Indeed, letting

$$\mathrm{GLWE}_s(\mu) \leftarrow \left(a_1, \dots, a_k, b = \sum_{j=1}^k a_j \cdot s_j + \quad \mu + \mathrm{e}\right), \text{ one gets}$$

$$\tau_u\big(\mathrm{GLWE}_s(\mu)\big) = \left(\tau_u(a_1), \dots, \tau_u(a_k), \tau_u(b) = \sum_{j=1}^k \tau_u\big(a_j\big) \cdot \tau_u(s_j) + \tau_u(\mu) + \tau_u(e)\right)$$

which turns out to be a GLWE encryption of plaintext $\tau_u(\mu)$ under private key $(\tau_u(s_1), \dots, \tau_u(s_k)) = \tau_u(\mathbf{s})$. Note that noise $\tau_u(e)$ in the resulting ciphertext $\tau_u(\mathrm{GLWE}_s(\mu))$ has the same magnitude as the noise e in the initial ciphertext $\mathrm{GLWE}_s(\mu)$. The reasons is that $\tau_u$ may will change the exponents, but will at most change the sign of the coefficients; accordingly the absolute values of the coefficients remain the same up, including the largest one, which is the magnitude. The condition given above following EQ 1, e.g. in the commutativity diagram therefore holds true for all morphisms $\psi = \tau_u$ with

$u \in (\mathbb{Z}/2N\mathbb{Z})^\times$ . In particular, all the prerequisites are fulfilled in the case of GLWE-type encryption. Using the previous notations, the evaluation of EQ 2 may therefore be implemented as

$$\mathrm{GLWE}_s(\tau_u(\mu) \cdot \bar{\mu}) \leftarrow \mathrm{GLWE}_s(\mu) \circledast_{\tau_u} \mathrm{GLWE}_s^{\circledast,\tau_u}(\bar{\mu})$$

Following the description following EQ 2, the further external product $\circledast_{\tau u}$ may be defined as

$$\begin{cases} \mathrm{GLWE}_s(\mu) \circledast_{\tau_u} \mathrm{GLWE}_s^{\circledast,\tau_u}(\bar{\mu}) := \tau_u\big(\mathrm{GLWE}_s(\mu)\big) \circledast \mathrm{GLWE}_s^{\circledast,\tau_u}(\bar{\mu}) \\ \mathrm{GLWE}_s^{\circledast,\tau_u}(\bar{\mu}) := (\mathrm{GLWE}_s^{\triangledown}(-\tau_u(s_1) \cdot \bar{\mu}), \dots, \\ \quad \mathrm{GLWE}_s^{\triangledown}(-\tau_u(s_k) \cdot \bar{\mu}), \mathrm{GLWE}_s^{\triangledown}(\bar{\mu})) \end{cases} \ .$$

for some unit $u \in (\mathbb{Z}/2N\mathbb{Z})^\times$ . Here

$$\mathrm{GLWE}_s^{\circledast,\tau_u}(\bar{\mu})$$

is an example of

$$\mathrm{Enc}_{\mathrm{sk}}^{\circledast,\psi}(\bar{\mu}),$$

and $\circledast_{\tau u}$ is an example of $\circledast_\psi$.

It should be noted that the above embodiment illustrates rather than limit the presently disclosed subject matter, and that those skilled in the art will be able to design many alternative embodiments. Examples of possible alternative embodiments include considering the $\mathbb{Z}[x]/\langle x^N + 1\rangle$ -module $\mathcal{R} = \mathbb{T}[x]/\langle x^N + 1\rangle$ (instead of the ring $\mathcal{R} = \mathbb{Z}[x]/\langle x^N + 1\rangle$ ) and $\mathcal{R}_q = \mathbb{T}_q[x]/\langle x^N + 1\rangle$ (see e.g., (Chillotti et al. 2020; Joye 2022)), and/or considering quotient polynomials more general than $x^N + 1$ (see e.g., (Joye and Walter 2022)). Moreover, embodiment may be defined for any morphisms, not necessarily automorphisms.

**Second example embodiment**

The second example embodiment considers NTRU-type encryption as for example in (Hoffstein, Pipher, and Silverman 1998). It may also be adapted to matrix versions of NTRU as done e.g., in (Bonte et al. 2022).

Some notations from the first example embodiment are recalled. Let $q$ and t < $q$ be positive integers, respectively the ciphertext modulus and a parameter defining the cleartext space. For $N$ a power of two, let also $\mathcal{R} = \mathbb{Z}[x]/\langle x^N + 1\rangle$ and $\mathcal{R}_q = \mathcal{R}/q\mathcal{R}$ . The plaintext message space is $\mathcal{M} = \mathcal{R}_q$ , the key space is $\mathcal{K} = \mathcal{R}$ , and the ciphertext space $\mathcal{C} = \mathcal{R}_q$ . Private keys are chosen in $\mathcal{K}$ such that they have an inverse in $\mathcal{R}_q$ and drawn at random according to $\chi_{\mathcal{R}}$ where $\chi_{\mathcal{R}}$ is a selected distribution that returns polynomials with small coefficients in $\mathcal{R}$ , typically following a normal distribution of small variance.

Define $\Delta = \lfloor q/t \rfloor$ , For NTRU encryption, cleartexts are also polynomials in $\mathcal{R}$ with coefficients in $[\![0, t - 1]\!]$ . Prior to encryption, a cleartext message has first to be encoded as an element of the plaintext message space. For a cleartext message $m$, this is done as $\mu \leftarrow \Delta \cdot m \in \mathcal{M}$ .

An NTRU ciphertext encrypting a message $\mu \in \mathcal{R}_q$ under private key $s \in \mathcal{K}$ is given by

$$\mathrm{NTRU}_s(\mu) \leftarrow \frac{r + \mu}{s} \quad \in \mathcal{R}_q \; ,$$

where r is a polynomial drawn at random according to $\chi_{\mathcal{R}}$ . In particular, NTRU is also additively homomorphic: for two plaintexts $\mu_1, \mu_2 \in \mathcal{R}_q$ , one has $\mathrm{NTRU}_s(\mu_1) + \mathrm{NTRU}_s(\mu_2) \leftarrow \mathrm{NTRU}_s(\mu_1, + \mu_2)$. Note that if $r_1$ (resp. $r_2$) is the random polynomial behind the encryption of $\mu_1$ (resp. $\mu_2$), then the random polynomial behind the encryption of $(\mu_1 + \mu_2)$ is $(r_1 + r_2)$, which also has small coefficients.

This encryption algorithm can be equipped by an external product relying on a gadget decomposition as before. The auxiliary algorithm Enc® is the NGS (for NTRU-GSW) algorithm defined in (Bonte et al. 2022). Given a gadget vector **g** = $(g_1, \ldots, g_\ell)$ E $\mathcal{R}_q^\ell$ , the NGS ciphertext of $\bar{\mu} \in \mathcal{R}_q$ under private key $s \in \mathcal{R}$ is defined as

(EQ. 4):
$$\mathrm{NGS}_s(\bar{\mu}) \leftarrow \left(\mathrm{NTRU}_s(s \cdot g_1\bar{\mu}), \ldots, \mathrm{NTRU}_s(s \cdot g_\ell\bar{\mu})\right) \; .$$

The external product $\circledast$, relatively to this auxiliary algorithm and using the (approximate or exact) gadget decomposition V of $f \in \mathcal{R}_q$ as defined in the first example embodiment, is computed from c = $\mathrm{NTRU}_s(\mu)$ and an NGS ciphertext of $\bar{\mu}$ under the same private key s as in EQ. 4 as

$$\mathrm{NTRU}_s(\tau_u(\mu) \cdot \bar{\mu}) \leftarrow \mathrm{NTRU}_s(\mu) \circledast_{\tau_u} \mathrm{NTRU}_s^{\circledast, \tau_u}(\bar{\mu})$$

This yields an NTRU encryption of $\mu \cdot \bar{\mu}$. under key s. Indeed, by definition of the gadget decomposition and defining r = $(r_1, \ldots, r_\ell)$ where for any $i \in [\![1, \ell]\!]$ , $\mathrm{NTRU}_s(s \cdot g_i\bar{\mu}) := \frac{r_i}{s} + g_i\bar{\mu}$ , and with $c = \frac{r+\mu}{s}$ , one has

$$\mathrm{NTRU}_s(\mu) \circledast \mathrm{NGS}_s(\bar{\mu}) \;\; := \langle \nabla c, \mathrm{NGS}_s(\bar{\mu}) \rangle$$

$$= \frac{\langle \nabla c, \mathbf{r} \rangle}{s} + \langle \nabla c, \mathbf{g} \rangle \cdot \bar{\mu}$$

$$\approx \frac{\langle \nabla c, \mathbf{r} \rangle + r\bar{\mu} + \mu\bar{\mu}}{s}$$

$$\in \mathrm{NTRU}_s(\mu \cdot \bar{\mu}) \, ,$$

provided (i) that the gadget decomposition is sufficiently exact and (ii) that $\|r \cdot \bar{\mu}\|_\infty$ is sufficiently small. This corresponds to Eq 1, taking $\mathrm{NTRU}_s(\mu)$ for $\mathrm{Enc}_{sk}(\mu)$, s for sk, $\mathrm{NGS}_s(\bar{\mu})$ for

$$\mathrm{Enc}_{sk}^{\circledast}(\bar{\mu}),$$

and $\mathrm{NTRU}_s(\mu \cdot \bar{\mu})$ for $\mathrm{Enc}_{sk}(\mu \cdot \bar{\mu})$. Note that in the above equation $\in$ is used in the final line to express that $\mathrm{NTRU}_s(\mu \cdot \bar{\mu})$ may be encompass many ciphertext due to the randomness used in such a ciphertext.

As for the commutativity diagram following EQ 1 using the same automorphisms $\tau_u : f(x) \to f(x^u)$ as defined in the first example embodiment for some unit $u \in (\mathbb{Z}/2N\mathbb{Z})^\times$, one can verify mathematically

$$\tau_u\big(\mathrm{NTRU}_s(\mu)\big) = \frac{\tau_u(r) + \tau_u(\mu)}{\tau_u(s)} \in \mathrm{NTRU}_{\tau_u(s)}\big(\tau_u(\mu)\big) \, ,$$

since $\tau_u(r)$ has about the same magnitude as r.

Therefore, all the prerequisites for the construction described following EQ 1 are fulfilled in the case of NTRU-type encryption. Using the previous notations, the evaluation of EQ 2 is implemented as

$$\mathrm{NTRU}_s(\tau_u(\mu) \cdot \bar{\mu}) \leftarrow \mathrm{NTRU}_s(\mu) \circledast_{\tau_u} \mathrm{NTRU}_s^{\circledast, \tau_u}(\bar{\mu})$$

where

$$\begin{cases} \mathrm{NTRU}_s(\mu) \circledast_{\tau_u} \mathrm{NTRU}_s^{\circledast, \tau_u}(\bar{\mu}) := \tau_u\big(\mathrm{NTRU}_s(\mu)\big) \circledast \mathrm{NTRU}_s^{\circledast, \tau_u}(\bar{\mu}) \\ \mathrm{NTRU}_s^{\circledast, \tau_u}(\bar{\mu}) := \big(\mathrm{NTRU}_s(\tau_u(s) \cdot g_1\bar{\mu}), \dots, \mathrm{NTRU}_s(\tau_u(s) \cdot g_\ell\bar{\mu})\big) \end{cases}$$

for some unit $u \in (\mathbb{Z}/2N\mathbb{Z})^\times$. Note that

$$\mathrm{NTRU}_s^{\circledast, \tau_u}(\bar{\mu})$$

is an example of

$$\mathrm{Enc}_{sk}^{\circledast, \psi}(\bar{\mu}),$$

and $\circledast_{\tau_u}$ is an example of $\circledast_\psi$

Again, it should be noted that the above embodiment illustrates rather than limit the presently disclosed subject matter, and that those skilled in the art will be able to design many alternative embodiments; e.g., for Matrix-NTRU (Bonte et al. 2022).

**Third example embodiment**

The third embodiment shows how to chain the operations $\circledast_\psi$ in order to homomorphically compute, without key switches, an inner product between a public vector and an encrypted vector in the exponent.

Let $q$, $t < q$, $N$, $\mathcal{R}$ and $\mathcal{R}_q$ be as in the first and second example embodiments.

Let a public vector be a = $(a_1, \ldots , a_n)$, and suppose in addition that for all $i \in [\![1, n]\!]$ , $a_i$ is some unit in $(\mathbb{Z}/2N\mathbb{Z})^\times$ . Typically, 2Nis a power of two, eg., 2048 or 4096. The length of the vector, that is the value of $n$, is typically 800. Though larger or smaller values are also possible.

Typically a is random vector in $(\mathbb{Z}/2N\mathbb{Z})^\times$ , however for convenience of exposition we will first assume that $a_1$ = 1 and, for all $i \in [\![1, n-1]\!]$ , the successive quotients $a_{i+1}/a_i$ have the same fixed value $u \in (\mathbb{Z}/2N\mathbb{Z})^\times$ .

The private vector s = $(s_1, \ldots , s_n)$ is encrypted *in the exponent* using the modified auxiliary algorithm Enc$^{\circledast,\psi}$ for $\psi$ = $\tau_u$; i.e., as

$$\text{evk} := \left( \text{Enc}_{\text{sk}}^{\circledast, \tau_u}(x^{s_i}) \right)_{i \in [\![1,n]\!]} .$$

The keys evk function as bootstrapping keys. Note that for each $s_i$ only one bootstrapping key is defined, e.g., one for the actual value of $s_i$; not a boostrapping key for each possible value of $s_i$, as is done in some other approaches. Also note, that virtually any distribution is allows for the digits of the secret key.

These bootstrapping keys may be defined for any value of $u$; preferably a $u$ with large order is used, e.g., $u$ = 5.

Then, the computation of Enc$_{\text{sk}}(x^{\langle a,s \rangle})$ can be carried out without any key-switches as follows:

start from a (possibly trivial) encryption of 1 under key sk; i.e., with an accumulator ACC containing ACC $\leftarrow$ Enc$_{\text{sk}}(1)$;

for $i$ from $n$ down to 1, compute ACC $\leftarrow$ ACC $\circledast_{\tau_u}$ evk[i]; i.e., the accumulator contains $\text{Enc}_{\text{sk}} \left( x^{\sum_{j=i}^{n} s_j \cdot a_j / a_i} \right)$ after loop iteration i;

output ACC, which contains by induction Enc$_{\text{sk}}(x^{\langle a,s \rangle})$, using $a_1$ = 1.

Note that initializing the accumulator with an encryption of 1, will lead to an encryption of the inner product in the exponent. The homomorphic computation of inner products is a worthwhile operation in its own right, however as pointed out below modify this step allows the computation of a blind rotation.

**Addressing the general case**

In the general case, it is only assumed that a = $(a_1, \ldots , a_n)$, with $a_i \in (\mathbb{Z}/2N\mathbb{Z})^\times$ . This implies that $a_i \neq 0$, however an implementation can easily work around this by skipping the value for which $a_i$ = 0. Indeed, letting $I = \{i \in [\![1, n]\!]\}$ and $I_0 = \{i \in [\![1, n]\!] \mid a_i \neq 0\}$, it is readily verified that $\sum_{i \in I} a_i \, s_i = \sum_{i \in I_0} a_i \, s_i$ .

All possible vectors **a** can be treated by e.g., the following tactics:

**Case $a_1 \neq 1$:**
at the end of the loop, the accumulator contains an encryption of $x^{\langle a,s \rangle/a_1}$, then a classical homomorphic evaluation of $\tau_{a_1}$, including one key switch, is performed as the very last step.
**Case $a_{i+1}/a_i$ = 1 for some $i$:**
then the operation in the loop for iteration i becomes ACC $\leftarrow$ ACC $\circledast$

$$\text{Enc}_{\text{sk}}^{\circledast}(x^{s_i});$$

for handling all such collisions, evk[i] is extended so that it contains the required information to retrieve both

$$\mathrm{Enc}_{\mathrm{sk}}^{\circledast}(x^{s_i})$$

and

$$\mathrm{Enc}_{\mathrm{sk}}^{\circledast,\tau_u}(x^{s_i}).$$

**Case $a_{i+1}/a_i \neq u$ for some i:**

let $v = a_{i+1}/a_i$ and let $\psi = \tau_u^{-1} \circ \tau_v$ and homomorphically apply $\psi$, including at least one key switch, right before computing ACC <- ACC $\circledast_{\tau u}$ evk[i] at loop iteration $i$;

compute ACC $\leftarrow$ ACC $\circledast_{\tau u}$ evk[i]; i.e., the accumulator contains $\mathrm{Enc}_{\mathrm{sk}}\left(x^{\sum_{j=i}^{n} s_j \cdot a_j/a_i}\right)$ after loop iteration $i$;

Note that an embodiment, may use a mixture of parametrized external products and non-parametrized ones, conventional ones.

In an embodiment, the vector **a** is permuted before performing the above computation. The same permutation applied to vector **a** is also applied to the secret key **s.** For example, in an embodiment, it is determined if vector **a** is contains the value 1, and if so, vector **a** is permuted so that $a_1 = 1$. For example, it is determined if vector **a** is contains values repeated two or more times, and if so, vector **a** is permuted so that the repeated values are immediately consecutive in vector **a.** For example, it is determined if vector **a** is contains values $a_i$ and $a_j$ such that $a_j = u \cdot a_i$, if so, vector **a** is permuted so that these values are immediately consecutive in vector **a.** Any time any one of these permutations are made, a key switch is avoided. Interestingly, it turns out in practice that for larger $n$ (the length of vector **a**), e.g., at least 512, at least 750, most key switches can be avoided.

For example, the following algorithm may be used. The bootstrapping keys:

$$\left(\mathrm{Enc}_{\mathrm{sk}}^{\circledast,\tau_u}(x^{s_i})\right)_{i\in[\![1,n]\!]},$$

and

$$\left(\mathrm{Enc}_{\mathrm{sk}}^{\circledast}(x^{s_i})\right)_{i\in[\![1,n]\!]}$$

are needed.

Optionally, at some point before executing the algorithm. Permute vector **a** and key **s,** as indicated above. For example, so that $a_1 = 1$ and that $a_{i+1}/a_i = u$ or 1, often, preferably as often as possible.

The following algorithm may be used

1. Initialize the accumulator ACC containing ACC $\leftarrow$ $\mathrm{Enc}_{\mathrm{sk}}(1)$, or to ACC $\leftarrow$ $\mathrm{Enc}_{\mathrm{sk}}(\tau_{u^{-1} \cdot a_n^{-1}}(w))$ ;

2. for $i$ from $n$ down to 1,

a. if $a_{i+1}/a_i = u$ : compute

$$\mathrm{ACC} \leftarrow \mathrm{ACC} \circledast_{\tau_u} \mathrm{Enc}_{\mathrm{sk}}^{\circledast,\tau_u}(x^{s_i})$$

b. if $a_{i+1}/a_i = 1$ : compute

$$\mathrm{ACC} \leftarrow \mathrm{ACC} \circledast \mathrm{Enc}_{\mathrm{sk}}^{\circledast}(x^{s_i})$$

c. if $a_{i+1}/a_i = v$ :

i. let $\psi = \tau_u^{-1} \circ \tau_v$

ii. ACC $\leftarrow \psi$(ACC), i.e. apply $\psi$ to the accumulator which gives a main encryption of under key $\psi$(sk)

iii. do a key switch on ACC from key $\psi$(sk) to key sk

iv.

$$ACC \leftarrow ACC \circledast_{\tau_u} Enc_{sk}^{\circledast,\tau_u}(x^{s_i})$$

Note: the accumulator contains $Enc_{sk}\left(x^{\sum_{j=i}^{n} s_j \cdot a_j/a_i}\right)$ after loop iteration $i$;

3. At this point ACC contains $Enc_{sk}(x^{\langle a,s\rangle/a1})$

4. An homomorphic evaluation of $\tau_{a1}$ including one key switch, is performed as the very last step.

In line 2, it may be assumed that $a_{n+1} = u \cdot a_n$, so that Step 2a would be taken for the first iteration.

Various optimizations are possible.

For example, instead of permuting to increase to occurrences of quotients of $u$, one may also increase to occurrences of quotients of small powers of $u$, e.g., $u^2$, e.g., up to $u^t$, e.g., with $t \leq 5$. For such values Step 2a may be execute multiple times, e.g., t times for a quotient of $u^t$. This reduces the number of times Step 2c would be executed. Note, experiments showed that for typical parameters and random vectors a of elements in $(\mathbb{Z}/2N\mathbb{Z})^{\times}$, Step 2c is not the majority.

Furthermore, additional bootstrapping keys may be added. For a general v, the corresponding bootstrapping key would be:

$$Enc_{sk}^{\circledast,\tau_v}(x^{s_i}).$$

This means that quotients of $v$ and small powers of v could also be handled without key switches. An interesting set of bootstrapping keys to add, are those for powers of $u$, e.g., $u^2$ and/or one or more other powers of u, e.g. , $u^t$. This is advantageous since, those bootstrap keys can be combined, to form any power of u, and thus further reduce the number of occurrences of Step 2c. For example, a window technique as described in (Lee et al. 2023) may be used.

Again, it should be noted that the above embodiment illustrates rather than limit the presently disclosed subject matter, and that those skilled in the art will be able to design many alternative embodiments. Examples of possible alternative embodiments include considering the $\mathbb{Z}[x]/\langle x^N + 1\rangle$-module $\mathcal{R} = \mathbb{T}[x]/\langle x^N + 1\rangle$ (instead of the ring $\mathcal{R} = \mathbb{Z}[x]/\langle x^N + 1\rangle)$ and $\mathcal{R}_q = \mathbb{T}_q[x]/\langle x^N + 1\rangle$ (see e.g., (Chillotti et al. 2020; Joye 2022)), and/or considering quotient polynomials more general than $x^N + 1$ (see e.g., (Joye and Walter 2022)). Furthermore, Matrix-NTRU (Bonte et al. 2022) may be used.

As described, this third example embodiment for evaluating an inner product in the exponent implicitly assumes that $x^{\langle a,s\rangle} \in \mathcal{M}$ (since the ciphertext $Enc_{sk}(x^{\langle a,s\rangle})$ is returned at the end of the computation). It also implicitly assumes that 1 $\in \mathcal{M}$ (used for the initialization in $Enc_{sk}(1)$). While this is clearly verified for $\mathcal{M} = \mathcal{R}_q$ when $\mathcal{R}_q = \mathcal{R}/q\mathcal{R}$ with $\mathcal{R} = \mathbb{Z}[x]/\langle x^N + 1\rangle$, this does not necessarily hold true for all alternative embodiments, e.g., for example in a torus-based embodiment. In those cases, one may consider a generalized inner product in the exponent that returns the encryption of w $\cdot x^{\langle a,s\rangle}$ for some scalar $w \in \mathcal{M}$. The accumulator is then initialized as ACC $\leftarrow Enc_{sk}(w)$, e.g. , using a, possibly trivial, encryption thereof. Even more generally, one may consider a blind rotation as a generalization of an inner product in the exponent.

**Blind rotation**

As indicated in the background section, a blind rotation comprises computing an encryption of w · $x^{\langle \mathbf{a}, \mathbf{s} \rangle}$ for $w \in \mathcal{R}_q$ . In this case, before the for-loop in Step 1, the accumulator ACC is initialized to a, possibly trivial, encryption of $\tau_{u^{-1} \cdot a_n^{-1}}(w)$ .

Note that when w = w is a scalar, it follows that $\tau_{u^{-1} \cdot a_n^{-1}}(w) = w$ and, in turn, that w · $x^{\langle \mathbf{a}, \mathbf{s} \rangle}$ = w · $x^{\langle \mathbf{a}, \mathbf{s} \rangle}$; the original third example embodiment corresponding to w = 1.

Yet again, it should be noted that the embodiment, in this case for the blind rotation illustrates rather than limit the presently disclosed subject matter, and that those skilled in the art will be able to design many alternative embodiments. This includes, but is not limited to, the methods found in (Bonnoron, Ducas, and Fillinger 2018; Lee et al. 2023; Wang et al. 2024; Li et al. 2024; Micheli et al. 2024; Xiang et al. 2023; Hong et al. 2024).

**Further Applications**

Let $\Delta = q/t$ where q and t are powers of two, and q > t. Over $\mathbb{Z}/q\mathbb{Z}$ , a TFHE-like ciphertext of a cleartext message $m \in \mathbb{Z}/t\mathbb{Z}$ under private key s $\in$ $\{0,1\}^n$ is a vector of the form

$$(\mathbf{a}, b = \langle \mathbf{a}, \mathbf{s} \rangle + \Delta m + e) \in (\mathbb{Z}/q\mathbb{Z})^n \times \mathbb{Z}/q\mathbb{Z}$$ for some noise error e satisfying $|e| < \frac{\Delta}{2}$ (Chillotti et al. 2020). The programmable bootstrapping (in short, PBS) in TFHE (Chillotti, Joye, and Paillier 2021) enables to transform an encryption of *m* into an encryption of *f(m)* for some function $f: \mathbb{Z}/t\mathbb{Z} \to \mathbb{Z}/t\mathbb{Z}$ ; the regular bootstrapping corresponds the function *f* being the identity map. The salient feature of this PBS operation is that it resets the noise present in the resulting ciphertext to a nominal value.

A PBS undergoes several procedures. One of them is the so-called modulus switching. The modulus switching operation takes as input TFHE ciphertext

$$\left( \mathbf{a} = (a_1, \dots, a_n), b = \sum_{i=1}^{n} a_i \, s_i + \Delta m + e \right) \in (\mathbb{Z}/q\mathbb{Z})^{n+1}$$

and outputs the vector $(\tilde{a}_1, \dots, \tilde{a}_n, \tilde{b}) \in (\mathbb{Z}/2N\mathbb{Z})^{n+1}$ with

$$\begin{cases} \tilde{a}_i = \left\lceil \frac{a_i}{q} \, 2N \right\rfloor & \text{for } i \in \{1, \dots, n\} \\ \tilde{b} = \left\lceil \frac{b}{q} \, 2N \right\rfloor \end{cases}$$

where 2N < q is a power of two. The resulting vector ($\tilde{a}_1, \dots, \tilde{a}_n, \tilde{b}$) is then basically used to homomorphically evaluating a (generalized) inner product in the exponent, between the mask $\tilde{\mathbf{a}} = (\tilde{a}_1, \dots, \tilde{a}_n)$ and the LWE secret $\mathbf{s} = (s_1, \dots, s_n)$, to obtain a GLWE ciphertext of $x^{\langle \tilde{\mathbf{a}}, \mathbf{s} \rangle} \in \mathcal{R}_q$ under (another) key $\mathbf{s} \in \mathcal{R}$ , where $\mathcal{R} = \mathbb{Z}[x]/\langle x^N + 1 \rangle$ and $\mathcal{R}_q = \mathcal{R}/q\mathcal{R}$ . More precisely, following (Chillotti, Joye, and Paillier 2021), with the previous notations, the blind rotation computes a GLWE encryption of

$$v(x) \cdot x^{-\tilde{b} + \sum_{i=1}^{n} \tilde{a}_i \, s_i \, (\text{mod } 2N)} \bmod \langle q, x^N + 1 \rangle ,$$

where the $\tilde{a}_i$'s and $\tilde{b}$ are public, the $s_i$'s are encrypted, and v is a public polynomial encoding a look-up table, called the test polynomial. This provides a convenient way to homomorphically implement a look-up table with polynomials. The test polynomial *v(x)* = $v_0$ + $v_1 x$ + ⋯ + $v_{N-1} x^{N-1}$ $\in \mathcal{R}_q$ is defined so as to verify

$$x^{-j} \cdot v(x) = \begin{cases} v_j + \cdots & \text{if } 0 \leq j < N \\ -v_j + \cdots & \text{if } N \leq j < 2N \end{cases},$$

noting that $j$ is defined modulo 2N and that $x^N = -1$. This creates a correspondence between j and $v_j$.

It is worth remarking that letting $w \leftarrow x^{-\bar{b}} v \in \mathcal{R}_q$ , one obtains the blind rotation as presented in thev third example embodiment with public vector $\tilde{\mathbf{a}} = (\tilde{a}_1, \ldots, \tilde{a}_n)$ and secret vector $s = (s_1, \ldots, s_n)$. In the general case, however, the modulus switching does not directly yield $\tilde{a}_i = 0$ or $\tilde{a}_i \in (\mathbb{Z}/2N\mathbb{Z})^\times$ corresponding to automorphisms. This is not problem though. Several techniques are known to verify the setting of the third example embodiment, including:

- changing the base ring $\mathcal{R}$ to a circulant ring (Bonnoron, Ducas, and Fillinger 2018) or a prime conductor cyclotomic ring of integers (Micheli et al. 2024);

- rewriting $\Sigma_1 \, \tilde{a}_i \, s_i$ as $\sum_i \tilde{a}_i^* s_i^*$ , where $\tilde{a}_i^* = 0$ or $\tilde{a}_i^* \in (\mathbb{Z}/2N\mathbb{Z})^\times$ , plus a correcting step offering trade-offs between noise growth/performance and evaluation key material (Lee et al. 2023, sec. 3.2.1 and 3.2.2);

- adapting the modulus switch to round directly to 0 or to elements of $(\mathbb{Z}/2N\mathbb{Z})^\times$ (Lee et al. 2023, sec. 3.3), or further, elements of a cyclic subgroup thereof (Wang et al. 2024).

It should also be noted that although the description is given with GLWE-type encryption, similar techniques may be designed using instead NTRU-type encryption as done for example in (Bonte et al. 2022; Li et al. 2024).
Further applications of the proposed method for the (generalized) inner product in the exponent include techniques for batched bootstrapping (Micheli et al. 2024) and circuit bootstrapping (Wang et al. 2024). Note that these methods, do not use a test polynomial.

**References**

Alperin-Sheriff, Jacob, and Chris Peikert. 2014. "Faster Bootstrapping with Polynomial Error." In Advances in Cryptology - CRYPTO 2014, Part I, edited by J. A. Garay and R. Gennaro, 8616:297-314. Lecture Notes in Computer Science. Springer. https://doi.org/10.1007/978-3-662-44371-2_17.
Bernard, Olivier, and Marc Joye. 2024. "Approximate CRT-Based Gadget Decomposition and Application to TFHE Blind Rotation." Cryptology ePrint Archive, Report 2024/909. https://ia.cr/2024/909.
Bonnoron, Guillaume, Leo Ducas, and Max Fillinger. 2018. "Large FHE Gates from Tensored Homomorphic Accumulator." In Progress in Cryptology - AFRICACRYPT 2018, edited by A. Joux, A. Nitaj, and T. Rachidi, 10831:217-51. Lecture Notes in Computer Science. Springer, Cham. https://doi.org/10.1007/978-3-319-89339-6 13.
Bonte, Charlotte, Ilia Iliashenko, Jeongeun Park, Hilder V. L. Pereira, and Nigel P. Smart. 2022. "FINAL: Faster FHE Instantiated with NTRU and LWE." In Advances in Cryptology - ASIACRYPT 2022, Part II, edited by S. Agrawal and D. Lin, 13792:188-215. Lecture Notes in Computer Science. Springer, Cham. https://doi.org/10.1007/978-3-031-22966-4 7.
Chillotti, Ilaria, Marc Joye, and Pascal Paillier. 2021. "Programmable Bootstrapping Enables Efficient Homomorphic Inference of Deep Neural Networks." In Cyber Security Cryptography and Machine Learning (CSCML 2021), edited by S. Dolev et al., 12716:1-19. Lecture Notes in Computer Science. Springer. https://doi.org/10.1007/978-3-030-78086-9_1.
Chillotti, Ilaria, Nicolas Gama, Mariya Georgieva, and Malika Izabachène. 2020. "TFHE: Fast Fully Homomorphic Encryption over the Torus." Journal of Cryptology 33 (1): 34-91. https://doi.org/10.1007/s00145-019-09319-x.
Ducas, Leo, and Daniele Micciancio. 2015. "FHEW: Bootstrapping Homomorphic Encryption in Less Than a Second." In Advances in Cryptology - EUROCRYPT 2015, Part I, edited by E. Oswald and M. Fischlin, 9056:617-40. Lecture Notes in Computer Science. Springer, Berlin, Heidelberg. https://doi.org/10.1007/978-3-662-46800-5 24.
Gama, Nicolas, Malika Izabachene, Phong Q. Nguyen, and Xiang Xie. 2016. "Structural Lattice Reduction: Generalized Worst-Case to Average-Case Reductions and Homomorphic Cryptosystems." In Advances in Cryptology - EUROCRYPT 2016, Part II, edited by M. Fischlin and J.-S. Coron, 9666:528-58. Lecture Notes in Computer Science. Springer, Berlin, Heidelberg. https://doi.org/10.1007/978-3-662-49896-5_19.
Gentry, Craig. 2010. "Computing Arbitrary Functions of Encrypted Data." Communications of the ACM 53 (3): 97-105. https://doi.org/10.1145/1666420.1666444.
Gentry, Craig, Amit Sahai, and Brent Waters. 2013. "Homomorphic Encryption from Learning with Errors: Conceptually-Simpler, Asymptotically-Faster, Attribute-Based." In Advances in Cryptology - CRYPTO 2013, Part I, edited by R. Canetti and J. A. Garay, 8042:75-92. Lecture Notes in Computer Science. Springer, Berlin, Heidelberg. https://doi.

org/10.1007/978-3-642-40041-4_5.

Hoffstein, Jeffrey, Jill Pipher, and Joseph H. Silverman. 1998. "NTRU: A Ring-Based Public Key Cryptosystem." In Algorithmic Number Theory - ANTS III, edited by J. P. Buhler, 1423:267-88. Lecture Notes in Computer Science. Springer, Berlin, Heidelberg. https://doi.org/10.1007/BFb0054868.

Hong, Deokhwa, Young-Sik Kim, Yongwoo Lee, and Eunyoung Seo. 2024. "A New Fine Tuning Method for FHEW/TFHE Bootstrapping with IND-CPAD Security." Cryptology ePrint Archive. https://ia.cr/2024/1052.

Joye, Marc. 2022. "SoK: Fully Homomorphic Encryption over the [Discretized] Torus." IACR Transactions on Cryptographic Hardware and Embedded Systems 2022 (4): 661-92. https://doi.org/10.46586/tches.v2022.i4.661-692.

Joye, Marc, and Pascal Paillier. 2022. "Blind Rotation in Fully Homomorphic Encryption with Extended Keys." In Cyber Security, Cryptology, and Machine Learning: 6th International Symposium (CSCML 2022), edited by J.Katz S. Dolev and A. Meisels, 13301:1-18. Lecture Notes in Computer Science. Springer, Cham. https://doi.org/10.1007/978-3-031-07689-3_1.

Joye, Marc, and Michael Walter. 2022. "Liberating TFHE: Programmable Bootstrapping with General Quotient Polynomials." In WAHC'22: Proceedings of the 10th Workshop on Encrypted Computing & Applied Homomorphic Cryptography, edited by M. Brenner, A. Costache, and K. Rohloff, 1-11. Association for Computing Machinery, New York. https://doi.org/10.1145/3560827.3563376.

Langlois, Adeline, and Damien Stehlé. 2015. "Worst-Case to Average-Case Reductions for Module Lattices." Designs, Codes and Cryptography 75: 565-99. https://doi.org/10.1007/s10623-014-9938-4.

Lee, Yongwoo, Daniele Micciancio, Andrey Kim, Rakyong Choi, Maxim Deryabin, Jieun Eom, and Donghoon Yoo. 2023. "Efficient FHEW Bootstrapping with Small Evaluation Keys, and Application to Threshold Homomorphic Encryption." In Advances in Cryptology - EUROCRYPT 2023, Part III, edited by C. Hazay and M. Stam, 14006:227-56. Lecture Notes in Computer Science. Springer, Cham. https://doi.org/10.1007/978-3-031-30620-4_8.

Li, Zhihao, Xianhui Lu, Zhiwei Wang, Ruida Wang, Ying Liu, Yinhang Zheng, Lutan Zhao, Kunpeng Wang, and Rui Hou. 2024. "Faster NTRU-Based Bootstrapping in Less Than 4 Ms." IACR Transactions on Cryptographic Hardware and Embedded Systems 2024 (3): 418-51. https://doi.org/10.46586/tches.v2024.i3.418-451.

Lyubashevsky, Vadim, Chris Peikert, and Oded Regev. 2010. "On Ideal Lattices and Learning with Errors over Rings." In Advances in Cryptology - EUROCRYPT 2010,edited by H. Gilbert, 6110:1-23. Lecture Notes in Computer Science. Springer. https://doi.org/10.1007/978-3-642-13190-5_1.

Micciancio, Daniele, and Yuriy Polyakov. 2021. "Bootstrapping in FHEW-Like Cryptosystems." In 9th Workshop on Encrypted Computing & Applied Homomorphic Cryptography (WAHC 2021), edited by M. Brenner, R. Player, and K. Rohloff, 17-28. ACM Press. https://doi.org/10.1145/3474366.3486924.

Micheli, Gabrielle De, Duhyeong Kim, Daniele Micciancio, and Adam Suhl. 2024. "Faster Amortized FHEW Bootstrapping Using Ring Automorphisms." In Public-Key Cryptography - PKC 2024, Part IV, edited by Q. Tang and V. Teague, 14604:322-53. Lecture Notes in Computer Science. Springer, Cham. https://doi.org/10.1007/978-3-031-57728-4 11.

Regev, Oded. 2009. "On Lattices, Learning with Errors, Random Linear Codes, and Cryptography." Journal of the ACM 56 (6): 34:1-40. https://doi.org/10.1145/1568318.1568324.

Rivest, Ronald L., Len Adleman, and Michael L. Dertouzos. 1978. "On Data Banks and Privacy Homomorphisms." In Foundations of Secure Computation, edited by R. A. DeMillo et al., 169-79. Academic Press.

Rothblum, Ron. 2011. "Homomorphic Encryption: From Private-Key to Public-Key." In Theory of Cryptography (TCC 2011), edited by Y. Ishai, 6597:219-34. Lecture Notes in Computer Science. Springer, Berlin, Heidelberg. https://doi.org/10.1007/978-3-642-19571-6_14.

Stehlé, Damien, Ron Steinfeld, Keisuke Tanaka, and Keita Xagawa. 2009. "Efficient Public Key Encryption Based on Ideal Lattices." In Advances in Cryptology - ASIACRYPT 2009, edited by M. Matsui, 5912:617-35. Lecture Notes in Computer Science. Sprinber, Berlin, Heidelberg. https://doi.org/10.1007/978-3-642-10366-7 36.

Wang, Ruida, Yundi Wen, Zhihao Li, Xianhui Lu, Benqiang Wei, Kun Liu, and Kunpeng Wang. 2024. "Circuit Bootstrapping: Faster and Smaller." In Advances in Cryptology - EUROCRYPT 2024, Part II, edited by M. Joye and G. Leander, 14652:342-72. Lecture Notes in Computer Science. Springer, Cham. https://doi.org/10.1007/978-3-031-58723-8_12.

Xiang, Binwu, Jiang Zhang, Yi Deng, Yiran Dai, and Dengguo Feng. 2023. "Fast Blind Rotation for Bootstrapping FHEs." In Advances in Cryptology - CRYPTO 2023, Part IV, edited by H. Handschuh and A. Lysyanskaya, 14084:3-36. Lecture Notes in Computer Science. Springer, Cham. https://doi.org/10.1007/978-3-031-38551-3 1.

Figure 3, already discussed above, schematically shows an example of an embodiment of a method 300 for homomorphically computing an external product parametrized by a morphism. Method 300 may be computer implemented. Method 300 may be part of a method for homomorphically evaluating a neural network.

For example, the neural network, either during training and/or during inference may have multiple layers, which may include, e.g., convolutional layers and the like. For example, the neural network may have at least 2, 5, 10, 15, 20 or 40 hidden layers, or more, etc. The number of neurons in the neural network may, e.g., be at least 10, 100, 1000, 10000, 100000, 1000000, or more, etc.

Many different ways of executing the method are possible, as will be apparent to a person skilled in the art. For example, the order of the steps can be performed in the shown order, but the order of the steps can be varied or some steps may be executed in parallel. Moreover, in between steps other method steps may be inserted. The inserted steps may represent refinements of the method such as described herein, or may be unrelated to the method. For example, some steps may be executed, at least partially, in parallel. Moreover, a given step may not have finished completely before a next step is started.

Embodiments of the method may be executed using software, which comprises instructions for causing a processor system to perform an embodiment of method 300. Software may only include those steps taken by a particular sub-entity of the system. The software and/or other data according to an embodiment may be stored in a non-transitory storage medium, such as a hard disk, a floppy, a memory, an optical disc, read only memory, random access memory, CD-ROMs, magnetic tape, optical data storage devices, etc. Transitory signals and carrier waves are excluded from non-transitory media.

The software may be sent as a transitory signal along a wire, or wireless, e.g., sent as a transitory signal over a data network, e.g., the Internet. For example, signals and/or carrier waves may serve as a transitory medium for carrying information. For example, a modulated electromagnetic wave may carry a signal bearing the software and/or other data according to an embodiment.

The software may be made available for download and/or for remote usage on an homomorphic computation device. Embodiments of the method may be executed using a bitstream arranged to configure programmable logic, e.g., a field-programmable gate array (FPGA), to perform an embodiment of the method.

It will be appreciated that the presently disclosed subject matter also extends to computer programs, particularly computer programs on or in a carrier, adapted for putting the presently disclosed subject matter into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the devices, units and/or parts of at least one of the systems and/or products set forth.

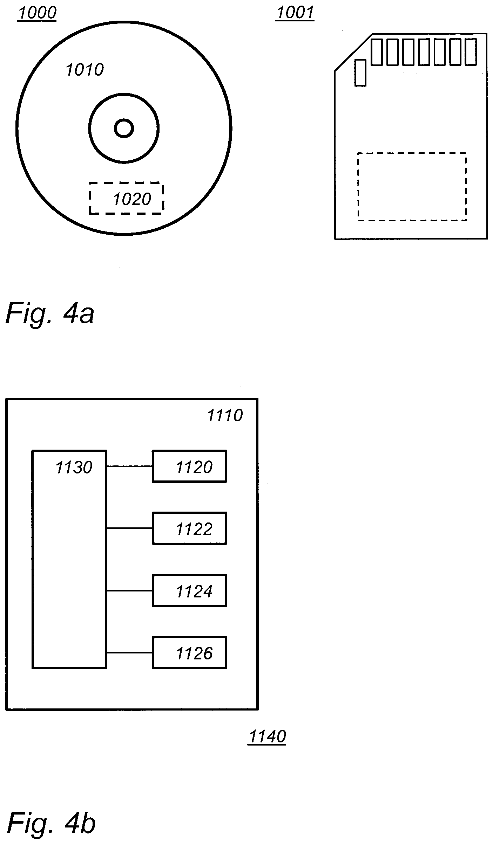

**Figure 4a** shows a computer readable medium 1000 having a writable part 1010, and a computer readable medium 1001 also having a writable part. Computer readable medium 1000 is shown in the form of an optically readable medium. Computer readable medium 1001 is shown in the form of an electronic memory, in this case a memory card. Computer readable medium 1000 and 1001 may store data 1020 wherein the data may indicate instructions, which when executed by a processor system, cause a processor system to perform an embodiment of a method for homomorphically computing an external product parametrized by a morphism, according to an embodiment. The computer program 1020 may be embodied on the computer readable medium 1000 as physical marks or by magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform an embodiment of said method for homomorphically computing an external product parametrized by a morphism.

**Figure 4b** shows in a schematic representation of a processor system 1140 according to an embodiment, e.g., homomorphic computation device. The processor system comprises one or more integrated circuits 1110. The architecture of the one or more integrated circuits 1110 is schematically shown in Figure 4b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all the processing defined in the method. Processor 1120, memory 1122, dedicated IC 1124 and communication element 1126 may be connected to each other via an interconnect 1130, say a bus. The processor system 1140 may be arranged for contact and/or contact-less communication, using an antenna and/or connectors, respectively.

For example, in an embodiment, processor system 1140, e.g., the device for homomorphically computing an external product parametrized by a morphism may comprise a processor circuit and a memory circuit, the processor being arranged to execute software stored in the memory circuit. For example, the processor circuit may be an Intel Core i7 processor, ARM Cortex-R8, etc. In an embodiment, the processor circuit may be ARM Cortex M0. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

While system 1140 is shown as including one of each described component, the various components may be duplicated in various embodiments. For example, the processing unit 1120 may include multiple microprocessors that are configured to independently execute the methods described herein or are configured to perform elements or subroutines of the methods described herein such that the multiple processors cooperate to achieve the functionality described herein. Further, where the system 1140 is implemented in a cloud computing system, the various hardware components may belong to separate physical systems. For example, the processor 1120 may include a first processor in a first homomorphic computation device and a second processor in a second homomorphic computation device.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of' when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

**Claims**

1. A cryptographic method (300) for homomorphically computing an external product parametrized by a morphism ($\psi$) in an homomorphic encryption scheme, the homomorphic encryption scheme (200) defining

   - an homomorphic main encryption (210, $\text{Enc}_{sk}$), the method obtaining a ciphertext (273) encrypted with the main encryption of the product of the morphism applied to a first plaintext ($\mu$) and of a second plaintext ($\bar{\mu}$) ($\text{Enc}_{sk}(\psi)(\mu)\bar{\mu}$), the morphism being non-trivial,
   - a main external product (230, $\circledast$) and a main auxiliary encryption (220,

   $$\text{Enc}_{sk}^{\circledast\text{'}}$$

   ), wherein the main external product is defined between a first plaintext encrypted with the main encryption ($\text{Enc}_{sk}$) and a second plaintext encrypted with the main auxiliary encryption (

   $$\text{Enc}_{sk}^{\circledast}$$

   ),
   - a further auxiliary encryption (250,

   $$\text{Enc}_{sk}^{\circledast,\psi}$$

   ) parametrized by the morphism ($\psi$), wherein the further auxiliary encryption has the property that encrypting a plaintext ($\bar{\mu}$) under a transformed secret key with respect to the morphism (

   $$\text{Enc}_{\psi(sk)}^{\circledast,\psi}(\bar{\mu})$$

   ) using the further auxiliary encryption equals the encryption of said plaintext ($\bar{\mu}$) using the main auxiliary

encryption (

$$\text{Enc}^{\circledast}_{\psi(\text{sk})}(\bar{\mu})$$

) (

$$\text{Enc}^{\circledast,\psi}_{\psi(\text{sk})}(\bar{\mu}) := \text{Enc}^{\circledast}_{\psi(\text{sk})}(\bar{\mu})$$

) under the secret key transformed with the morphism ($\psi(\text{sk})$),
- a further external product (260, $\circledast_\psi$) parametrized by the morphism ($\psi$), wherein the further external product is defined between a first plaintext ($\mu$) encrypted with the main encryption ($\text{Enc}_{\text{sk}}$) and a second plaintext ($\bar{\mu}$)

encrypted with the further auxiliary encryption ( $\text{Enc}^{\circledast,\psi}_{\text{sk}}$ ),

wherein the method comprises

- obtaining (310) a first plaintext encrypted according to the main encryption (271, $\text{Enc}_{\text{sk}}(\mu)$), and a second plaintext encrypted according to the further auxiliary encryption (272,

$$\text{Enc}^{\circledast,\psi}_{\text{sk}}(\bar{\mu})$$

), the first plaintext and the second plaintext being encrypted according to the same key (sk),
- applying (320) the further external product (260) to the first plaintext encrypted according to the main encryption and to the second plaintext encrypted according to the further auxiliary encryption to obtain an encryption (273) of the product of the morphism applied to the first plaintext and of the second plaintext ($\psi(\mu)\bar{\mu}$) according to the same key (sk).

2. A method for homomorphically computing a parametrized external product as in Claim 1, wherein the morphism and the main encryption have the property ($\psi(\text{Enc}_{\text{sk}}(\mu)) = \text{Enc}_{\psi(\text{sk})}(\psi(\mu))$) that the morphism ($\psi$) applied to an encrypted plaintext ($\text{Enc}_{\text{sk}}(\mu)$) according to a secret key (sk) ($\psi(\text{Enc}_{\text{sk}}(\mu))$) is equal to an encryption of the morphism ($\psi$) applied to the plaintext ($\mu$) according to the secret key transformed with the morphism ($\psi(\text{sk})$).

3. A method for homomorphically computing a parametrized external product as in Claim 1 or 2, wherein the main external product between a first plaintext ($\mu$) encrypted with the main encryption ($\text{Enc}_{\text{sk}}(\mu)$) and a second plaintext ($\bar{\mu}$) encrypted with the main auxiliary encryption (

$$\text{Enc}^{\circledast}_{\text{sk}}(\bar{\mu})$$

) equals a product of the first plaintext and the second plaintext ($\bar{\mu}$) encrypted with the main encryption (

$$\text{Enc}_{\text{sk}}(\mu) \circledast \text{Enc}^{\circledast}_{\text{sk}}(\bar{\mu}) = \text{Enc}_{\text{sk}}(\mu \cdot \bar{\mu})$$

).

4. A method for homomorphically computing a parametrized external product as in any one of the preceding claims, wherein the further external product between the first plaintext encrypted with the main encryption ($\text{Enc}_{\text{sk}}$) and the second plaintext encrypted with the further auxiliary encryption (

$$\mathrm{Enc}_{\mathrm{sk}}^{\circledast,\psi},$$

) equals the main external product between the morphism applied to the encrypted first plaintext ($\psi(\mathrm{Enc}_{\mathrm{sk}}(\mu))$), and the second

$$\mathrm{Enc}_{\mathrm{sk}}^{\circledast,\psi}(\bar{\mu}))$$

plaintext encrypted with the further auxiliary encryption ( ) (

$$\mathrm{Enc}_{\mathrm{sk}}(\mu) \circledast_{\psi} \mathrm{Enc}_{\mathrm{sk}}^{\circledast,\psi}(\bar{\mu}) := \psi\big(\mathrm{Enc}_{\mathrm{sk}}(\mu)\big) \circledast \mathrm{Enc}_{\mathrm{sk}}^{\circledast,\psi}(\bar{\mu})$$

).

5. A method for homomorphically computing a parametrized external product as in any one of the preceding claims, wherein the plaintext space and/or ciphertext space of the main encryption and the main auxiliary encryption are polynomial structures.

6. A method for homomorphically computing a parametrized external product as in any one of the preceding claims, wherein the homomorphic computation of the product of the morphism applied to the first plaintext and of the second plaintext encrypted with the main encryption does not involve a key switch between the secret key (sk ) and the same key transformed with the morphism ($\psi$(sk)).

7. A method for homomorphically computing an external product as in any one of the preceding claims, wherein the main encryption, main auxiliary encryption, and/or the further auxiliary encryption are symmetric encryption or asymmetric encryption.

8. A method for homomorphically computing a parametrized external product as in any one of the preceding claims, wherein the plaintext message space is $\mathcal{M} = \mathcal{R}_q$ , the key space is $\mathcal{K} = \mathcal{R}^k$ , and the ciphertext space

$$\mathcal{C} = \mathcal{R}_q^{k+1},$$

wherein $\mathcal{R} = \mathbb{Z}[x]/\langle F(x)\rangle$ and $\mathcal{R}_q = \mathcal{R}/q\mathcal{R}$ , and q, t < q, and k are positive integers and F is an irreducible polynomial.

9. A method for homomorphically computing a parametrized external product as in any one of the preceding claims, wherein the plaintext message space is M = $\mathcal{R}_q$ , the key space is $\mathcal{K} = \bar{\mathcal{R}}^k$ , and the ciphertext space

$$\mathcal{C} = \mathcal{R}_q^{k+1},$$

wherein $\mathcal{R} = \mathbb{T}[x]/\langle F(x)\rangle$ , $\mathcal{R}_q = \mathcal{R}/q\mathcal{R}$ and $\bar{\mathcal{R}} = \mathbb{Z}[x]/\langle \Phi_M(x)\rangle$ , and q, t < q, and k are positive integers and F is an irreducible polynomial.

10. A method as in Claim 8 or 9 wherein the irreducible polynomial F is the M-th cyclotomic polynomial $\Phi_M$.

11. A method as in Claim 10, wherein M = 2N with N a power of two and $\Phi_M(x) = x^N + 1$.

12. A method for homomorphically computing a parametrized external product as any one of Claims 8-11, wherein the main encryption is GLWE$_s$ encryption for a key s the morphism is an automorphism ($\tau_u$) defined with respect to a unit $u \in (\mathbb{Z}/M\mathbb{Z})^{\times}$ unequal to 1, the automorphism taking as input one or several polynomials and for each polynomial $f(x)$, returning the polynomial wherein variable $x$ is replaced with $x^u$ ($\tau_u$: $f := f(x) \mapsto \tau_u(l) := f(x^u)$)

the main auxiliary encryption is

$$\mathrm{GLWE}_s^{\circledast} = \mathrm{GGSW}_s$$

encryption for the key s
the further auxiliary encryption is

$$\mathrm{GLWE}_s^{\circledast, \tau_u}$$

encryption for the key s where

$$\mathrm{GLWE}_s^{\circledast, \tau_u}(\bar{\mu}) := (\mathrm{GLWE}_s^{\triangledown}(-\tau_u(s_1) \cdot \bar{\mu}), \ldots, \mathrm{GLWE}_s^{\triangledown}(-\tau_u(s_k) \cdot \bar{\mu}), \mathrm{GLWE}_s^{\triangledown}(\bar{\mu}))$$

for a plaintext $\bar{\mu}$, wherein key s comprises the key elements $s_1, .., s_k$, and $\mathrm{GLWE}_s^{\triangledown}$ is a gadget GLWE encryption.

13. A method for homomorphically computing a parametrized external product as in any one of Claims 8-11, wherein the main encryption is the NTRU$_s$ encryption for a key s the morphism is an automorphism ($\tau_u$) defined with respect to a unit $u \in (\mathbb{Z}/M\mathbb{Z})^{\times}$ unequal to 1, the automorphism taking as input a polynomial $f(x)$ and returning the polynomial wherein a variable $x$ is replaced with $x^u$ ($\tau_u$: $f := f(x) \mapsto \tau_u(f) := f(x^u)$) the main auxiliary encryption is

$$\mathrm{NTRU}_s^{\circledast} = \mathrm{NGS}_{s,\epsilon}$$

encryption for the key $s$
the further auxiliary encryption is

$$\mathrm{NTRU}_s^{\circledast, \tau_u}$$

encryption for the key s where

$$\mathrm{NTRU}_s^{\circledast, \tau_u}(\bar{\mu}) := \mathrm{NTRU}_s^{\triangledown}(\tau_u(s) \cdot \bar{\mu})$$

for a plaintext $\bar{\mu}$.

14. A cryptographic method for homomorphically computing an inner product between a public vector ($\boldsymbol{a} = (a_1, \ldots, a_n)$) and a private vector ($\boldsymbol{s} = (s_1, \ldots, s_n)$) in the exponent including using a method for homomorphically computing a parametrized external product as in any one of the preceding claims, the method comprising

  - initializing an accumulator (***ACC***), the accumulator being encrypted with the main encryption,
  - updating the accumulator with the further external product between the accumulator and a bootstrapping key, the bootstrapping key comprising an encryption with the further auxiliary encryption.

15. A method as in Claim 14, wherein the morphism is an automorphism ($\tau_u$16. defined with respect to a unit

$u \in (\mathbb{Z}/M\mathbb{Z})^{\times}$ unequal to 1, the automorphism taking as input one or several polynomials and for each polynomial $f(x)$ and returning the polynomial wherein variable $x$ is replaced with $x^u$ ($\tau_u$: $f := f(x) \mapsto \tau_u(f) := f(x^u)$).

16. A method as in any one of Claims 14-15, using the method for homomorphically computing an inner product between a public vector ($a = (a_1, \dots, a_n)$) and a private vector ($s = (s_1, \dots, s_n)$) to compute a blind rotation of an encryption of a test polynomial (w).

17. A method for performing a computation using fully homomorphic encryption (FHE) cryptography, the computation comprising a set of FHE operations implementing the computation and operating on encrypted data items, the method comprising:

   (a) receiving one or more encrypted data items for the computation from a data-provider device, the one or more encrypted data items being encrypted with an encryption key of the data-provider device,
   (b) performing the set of FHE operations on encrypted data items including the received encrypted data items, obtaining one or more FHE encrypted result data items, the performing comprising a method according to any one of the preceding claims,
   (c) storing the one or more FHE encrypted result data items for later FHE processing, and/or transmitting the one or more FHE encrypted result data items for further FHE processing on a further device

18. A method as in any one of the preceding claims, comprising evaluating a neural network on one or more received FHE encrypted data items, obtaining one or more FHE encrypted result data items, e.g., wherein the received FHE encrypted data items represent an image, a video, or an audio fragment, e.g., wherein the neural network is a classifier, or an image, a video, or an audio generator.

19. A system comprising: one or more processors; and one or more storage devices storing instructions that, when executed by the one or more processors, cause the one or more processors to perform operations for any one of Claims 1-18.

20. A transitory or non-transitory computer storage medium encoded with instructions that, when executed by one or more computers, cause the one or more computers to perform the method according to any one of Claims 1-18.

100

110

111

112

113

120

121

122

123

Fig. 1a

102

120

110.1

172

110.2

Fig. 1b

200

240

210

211    212

220

221    222

250

251    252

230

231    233

232

260

261    263

262

Fig. 2a

271    260    273

272

Fig. 2b

300

310

320

Fig. 3

*1000*

*1010*

*1020*

*1001*

# Fig. 4a

*1110*

*1130*

*1120*

*1122*

*1124*

*1126*

*1140*

# Fig. 4b

# EUROPEAN SEARCH REPORT

**Application Number**

EP 24 31 5529

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XIANG BINWU ET AL: "Fast Blind Rotation for Bootstrapping FHEs", 9 August 2023 (2023-08-09), ADVANCES IN CRYPTOLOGY - CRYPTO 2023; [LECTURE NOTES IN COMPUTER SCIENCE; LECT.NOTES COMPUTER], SPRINGER NATURE SWITZERLAND, CHAM, PAGE(S) 3 - 36, XP047666708, ISSN: 0302-9743 ISBN: 978-3-031-38550-6 [retrieved on 2023-08-09] | 1-11, 14-20 | INV. H04L9/00 H04L9/30 |
| A | * sections 2.1, 3 and Algorithm 1 * ----- | 12,13 | |
| X | RUIDA WANG ET AL: "FHEW-like Leveled Homomorphic Evaluation: Refined Workflow and Polished Building Blocks", IACR, INTERNATIONAL ASSOCIATION FOR CRYPTOLOGIC RESEARCH , vol. 20241009:072714 9 October 2024 (2024-10-09), pages 1-50, XP061090638, Retrieved from the Internet: URL:https://eprint.iacr.org/archive/2024/1318/1728458834.pdf [retrieved on 2024-10-09] | 1-11, 14-20 | |
| A | * sections 2.2, 2.4 and B.4 * ----- | 12,13 | **TECHNICAL FIELDS SEARCHED (IPC)**<br><br>H04L |

The present search report has been drawn up for all claims

| Place of search | Date of completion of the search | Examiner |
|---|---|---|
| Munich | 25 April 2025 | Billet, Olivier |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

        ......................................................................................

& : member of the same patent family, corresponding
    document

EPO FORM 1503 03.82 (P04C01)

## REFERENCES CITED IN THE DESCRIPTION

**Non-patent literature cited in the description**

- **I. CHILLOTTI et al.** *Programmable Bootstrapping Enables Efficient Homomorphic Inference of Deep Neural Networks*, https://doi.org/l0.1007/978-3-030-78086-9 1
- Faster Bootstrapping with Polynomial Error. **ALPERIN-SHERIFF, JACOB** ; **CHRIS PEIKERT.** Advances in Cryptology - CRYPTO 2014, Part I,. Springer, 2014, vol. 8616, 297-314
- **BERNARD, OLIVIER** ; **MARC JOYE**. Approximate CRT-Based Gadget Decomposition and Application to TFHE Blind Rotation. *Cryptology ePrint Archive*, 2024, vol. 909, https://ia.cr/2024/909
- Large FHE Gates from Tensored Homomorphic Accumulator. **BONNORON, GUILLAUME** ; **LEO DUCAS** ; **MAX FILLINGER**. Progress in Cryptology - AFRICACRYPT 2018. Springer, 2018, vol. 10831, 217-51
- FINAL: Faster FHE Instantiated with NTRU and LWE. **BONTE, CHARLOTTE** ; **ILIA ILIASHENKO** ; **JEONGEUN PARK** ; **HILDER V. L. PEREIRA** ; **NIGEL P.** Advances in Cryptology - ASIACRYPT 2022, Part II. Springer, 2022, vol. 13792, 188-215
- Programmable Bootstrapping Enables Efficient Homomorphic Inference of Deep Neural Networks. **CHILLOTTI, ILARIA** ; **MARC JOYE** ; **PASCAL PAILLIER et al.** Cyber Security Cryptography and Machine Learning (CSCML 2021). Springer, 2021, vol. 12716, 1-19
- **CHILLOTTI, ILARIA** ; **NICOLAS GAMA** ; **MARIYA GEORGIEVA** ; **MALIKA IZABACHÈNE**. TFHE: Fast Fully Homomorphic Encryption over the Torus. *Journal of Cryptology*, 2020, vol. 33 (1), 34-91, https://doi.org/10.1007/s00145-019-09319-x
- FHEW: Bootstrapping Homomorphic Encryption in Less Than a Second. **DUCAS, LEO** ; **DANIELE MICCIANCIO**. Advances in Cryptology - EUROCRYPT 2015, Part I. Springer, 2015, vol. 9056, 617-40
- Structural Lattice Reduction: Generalized Worst-Case to Average-Case Reductions and Homomorphic Cryptosystems. **GAMA, NICOLAS** ; **MALIKA IZABACHENE** ; **PHONG Q. NGUYEN** ; **XIANG XIE**. Advances in Cryptology - EUROCRYPT 2016, Part II. Springer, 2016, vol. 9666, 528-58
- **GENTRY, CRAIG**. Computing Arbitrary Functions of Encrypted Data. *Communications of the ACM*, 2010, vol. 53 (3), 97-105, https://doi.org/10.1145/1666420.1666444
- Homomorphic Encryption from Learning with Errors: Conceptually-Simpler, Asymptotically-Faster, Attribute-Based. **GENTRY, CRAIG** ; **AMIT SAHAI** ; **BRENT WATERS**. Advances in Cryptology - CRYPTO 2013, Part I. Springer, 2013, vol. 8042, 75-92
- NTRU: A Ring-Based Public Key Cryptosystem. **HOFFSTEIN, JEFFREY** ; **JILL PIPHER** ; **JOSEPH H. SILVERMAN**. Algorithmic Number Theory - ANTS III. Springer, 1998, vol. 1423, 267-88
- **HONG, DEOKHWA** ; **YOUNG-SIK KIM** ; **YONGWOO LEE** ; **EUNYOUNG SEO**. A New Fine Tuning Method for FHEW/TFHE Bootstrapping with IND-CPAD Security. *Cryptology ePrint Archive*, 2024, https://ia.cr/2024/1052
- **JOYE, MARC**. SoK: Fully Homomorphic Encryption over the [Discretized] Torus. *IACR Transactions on Cryptographic Hardware and Embedded Systems 2022*, 2022, vol. 4, 661-92, https://doi.org/10.46586/tches.v2022.i4.661-692
- Blind Rotation in Fully Homomorphic Encryption with Extended Keys.. **JOYE, MARC** ; **PASCAL PAILLIER**. Cyber Security, Cryptology, and Machine Learning: 6th International Symposium (CSCML 2022). Springer, 2022, vol. 13301, 1-18
- Liberating TFHE: Programmable Bootstrapping with General Quotient Polynomials. **JOYE, MARC** ; **MICHAEL WALTER**. WAHC'22: Proceedings of the 10th Workshop on Encrypted Computing & Applied Homomorphic Cryptography. Association for Computing Machinery, 2022, 1-11
- **LANGLOIS, ADELINE** ; **DAMIEN STEHLÉ**. Worst-Case to Average-Case Reductions for Module Lattices. *Designs, Codes and Cryptography*, 2015, vol. 75, 565-99, https://doi.org/10.1007/s10623-014-9938-4
- Efficient FHEW Bootstrapping with Small Evaluation Keys, and Application to Threshold Homomorphic Encryption. **LEE, YONGWOO** ; **DANIELE MICCIANCIO** ; **ANDREY KIM** ; **RAKYONG CHOI** ; **MAXIM DERYABIN** ; **JIEUN EOM** ; **DONGHOON YOO**. Advances in Cryptology - EUROCRYPT 2023, Part III. Springer, 2023, vol. 14006, 227-56

- **LI, ZHIHAO** ; **XIANHUI LU** ; **ZHIWEI WANG** ; **RUIDA WANG** ; **YING LIU** ; **YINHANG ZHENG** ; **LUTAN ZHAO** ; **KUNPENG WANG** ; **RUI HOU**. Faster NTRU-Based Bootstrapping in Less Than 4 Ms. *IACR Transactions on Cryptographic Hardware and Embedded Systems 2024*, 2024, vol. 3, 418-51, https://doi.org/10.46586/tches.v2024.i3.418-451
- On Ideal Lattices and Learning with Errors over Rings. **LYUBASHEVSKY, VADIM** ; **CHRIS PEIKERT** ; **ODED REGEV**. Advances in Cryptology - EUROCRYPT 2010. Springer, 2010, vol. 6110, 1-23
- Bootstrapping in FHEW-Like Cryptosystems. **MICCIANCIO, DANIELE** ; **YURIY POLYAKOV**. 9th Workshop on Encrypted Computing & Applied Homomorphic Cryptography (WAHC 2021. ACM Press, 2021, 17-28
- Faster Amortized FHEW Bootstrapping Using Ring Automorphisms. **MICHELI, GABRIELLE DE** ; **DUHYEONG KIM** ; **DANIELE MICCIANCIO** ; **ADAM SUHL**. Public-Key Cryptography - PKC 2024, Part IV. Springer, 2024, vol. 14604, 322-53
- **REGEV, ODED**. On Lattices, Learning with Errors, Random Linear Codes, and Cryptography. *Journal of the ACM 56*, 2009, vol. 6 (34), 1-40, https://doi.org/10.1145/1568318.1568324
- On Data Banks and Privacy Homomorphisms. **RIVEST, RONALD L** ; **LEN ADLEMAN** ; **MICHAEL L. DERTOUZOS et al.** Foundations of Secure Computation. Academic Press, 1978, 169-79
- Homomorphic Encryption: From Private-Key to Public-Key. **ROTHBLUM, RON**. Theory of Cryptography (TCC 2011). Springer, 2011, vol. 6597, 219-34
- Efficient Public Key Encryption Based on Ideal Lattices. **STEHLÉ, DAMIEN** ; **RON STEINFELD** ; **KEISUKE TANAKA** ; **KEITA XAGAWA**. Advances in Cryptology - ASIACRYPT 2009. Sprinber, 2009, vol. 5912, 617-35
- Circuit Bootstrapping: Faster and Smaller. **WANG, RUIDA** ; **YUNDI WEN** ; **ZHIHAO LI** ; **XIANHUI LU** ; **BENQIANG WEI** ; **KUN LIU** ; **KUNPENG WANG**. Advances in Cryptology - EUROCRYPT 2024, Part II. Springer, 2024, vol. 14652, 342-72
- Fast Blind Rotation for Bootstrapping FHEs. **XIANG, BINWU** ; **JIANG ZHANG** ; **YI DENG** ; **YIRAN DAI** ; **DENGGUO FENG**. Advances in Cryptology - CRYPTO 2023, Part IV,. Springer, 2023, vol. 14084, 3-36